# EUROPEAN PATENT APPLICATION

(11) **EP 3 364 308 A1**
(43) Date of publication of application: **22.08.2018**
(21) Application number: 18157624.0
(22) Date of filing: 20.02.2018
(51) Int. Cl.: G06F 17/27, G06F 17/24, G06F 17/30

(54) **ELECTRONIC DEVICE AND METHOD OF PROVIDING INFORMATION THEREOF**

(30) Priority: 20.02.2017 KR 20170022440
(71) Applicant: Samsung Electronics Co., Ltd., Suwon-si, Gyeonggi-do 16677 (KR)
(72) Inventor: Chung, Hee-Young, 16677 Suwon-si (KR); Lee, Seong-Rok, 16677 Suwon-si (KR); Park, Kyung-Eun, 16677 Suwon-si (KR); Song, Ga-Jin, 16677 Suwon-si (KR)
(74) Representative: Nederlandsch Octrooibureau

(57) **Abstract**

An electronic device and an information providing method in the electronic device are provided. The electronic device includes a display, a communication circuit, and at least one processor that is operatively or electrically connected to the display and the communication circuit, wherein the at least one processor is configured to transmit first text, among the text displayed on the display, to a first external electronic device through the communication circuit, receive, from the external electronic device, connection information to a second external electronic device corresponding to the first text through the communication circuit, and display, on the display, the received connection information to the second external electronic device.

## Description

### TECHNICAL FIELD

The present disclosure relates to an electronic device and a method of providing information using the same. More particularly, the present disclosure relates to an electronic device for making a request to analyse at least a part of a required text, instead of analysing a full text, in an analysis of the text and for receiving information related to a service provided by a service-providing device selected based on an analysis result, and may further provide an information-providing method using the electronic device.

### BACKGROUND

With the development of technology, various application techniques have been developed for electronic devices in order to provide useful information to users. One of the application techniques is to provide services related to information transmitted/received between the users or information input by a user through application programs executed in an electronic device. In order to provide such services, it is necessary to analyse the information transmitted/received between the users or the information input by users (for example, conversations), and for example, a natural language processing (NLP) technique may be used for analysis of the conversations.

A conversation analysis technique of the related art requires a database (DB) including information related to a domain indicating the type of service (e.g., restaurants, reservation of air tickets, event extraction, or the like) and more detailed information for more accurate analysis. Thus, such information is mainly managed by a server having a large memory capacity, and the server processes the conversations. Therefore, it may be inefficient to process the analysis of the conversations by the electronic device that has a relative lack of storage space compared to the server.

In addition, the information related to the domain (e.g., restaurants, reservation of air tickets, event extraction, or the like), which indicates the type of service that can actually be provided according to the service evolution stage of the conversation analysis technology, may be limited, and in order to analyse entire conversations, the electronic device must continuously transmit, to the server, information related to greetings or personal matters, which does not lead to any actual service, thereby causing problems, such as a violation of privacy.

Furthermore, since all the conversations between users are continuously monitored and the monitored conversations are continuously transmitted to the server for a request for conversation analysis in the conversation analysis technique of the related art, the time and cost taken for the conversation analyses may be increased.

Therefore, a need exists for an electronic device for making a request to analyse at least a part of a required text, instead of analysing a full text, in an analysis of the text and for receiving information related to a service provided by a service-providing device selected based on an analysis result, and may further provide an information-providing method using the electronic device.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide an electronic device for making a request to analyse at least a part of a required text, instead of analysing a full text, in an analysis of the text and for receiving information related to a service provided by a service-providing device selected based on an analysis result, and may further provide an information-providing method using the electronic device.

In accordance with an aspect of the present disclosure, an electronic device is provided. The electronic device includes a housing, a touch screen display that is exposed through a portion of the housing, a wireless communication circuit that is located inside the housing, at least one processor that is located inside the housing and is operatively or electrically connected to the display and the communication circuit, and a memory that is located inside the housing and is electrically connected to the at least one processor, wherein the memory stores a plurality of templates, each template including a set of words, phrases, and/or sentences, wherein the memory stores at least one application program configured to process and display text data, and wherein the memory stores instructions that allow the at least one processor to receive a user input for selecting at least one application program through a first user interface displayed on the display, display text, which is input through the display or is received using the communication circuit, on a second user interface associated with the selected application program, access at least a part of the displayed text, compare the accessed part of the displayed text with at least one template, transmit at least a portion of the accessed part of the displayed text using the communication circuit based on, at least in part, the comparison, receive data created in relation to the accessed part of the displayed text using the communication circuit, and display text or images on the second user interface to overlap, at least in part, the text.

In accordance with another aspect of the present disclosure, an electronic device is provided. The electronic device includes a housing, a touch screen display that is exposed through a portion of the housing, a wireless communication circuit that is located inside the housing, at least one processor that is located inside the housing and is operatively or electrically connected to the display and the communication circuit, and a memory that is located inside the housing and is electrically connected to the at least one processor, wherein the memory stores a plurality of templates, each template including a set of words, phrases, and/or sentences, wherein the memory stores at least one application program configured to process and display text data, and wherein the memory stores instructions that allow the at least one processor to display, on a user interface, text that is input through the display or is received using the communication circuit, access at least a part of the displayed text using a software program that converts voice to text, compare the accessed part of the displayed text with at least one template, transmit at least a portion of the accessed part of the displayed text using the communication circuit based on, at least in part, the comparison, receive data created in relation to the accessed part of the displayed text using the communication circuit, and display text or images on the user interface to overlap, at least in part, the text.

In accordance with another aspect of the present disclosure, an electronic device is provided. The electronic device includes a housing, a touch screen display that is exposed through a portion of the housing, a wireless communication circuit that is located inside the housing, at least one processor that is located inside the housing and is operatively or electrically connected to the display and the communication circuit, and a memory that is located inside the housing and is electrically connected to the at least one processor, wherein the memory stores a plurality of templates, each template including a set of words, phrases, and/or sentences, wherein the memory stores at least one application program configured to process text data and to display the text data on a user interface, and wherein the memory stores instructions that allow the at least one processor to display, on the user interface, text that is input through the display or is received using the communication circuit, access at least a part of the displayed text using the application program, compare the accessed part of the displayed text with at least one template, transmit at least a portion of the accessed part of the displayed text using the communication circuit based on, at least in part, the comparison, receive data created in relation to the accessed part of the displayed text using the communication circuit, and display text or images on the user interface to overlap, at least in part, the text.

In accordance with another aspect of the present disclosure, an electronic device is provided. The electronic device includes a display, a communication circuit, and at least one processor that is operatively or electrically connected to the display and the communication circuit, wherein the at least one processor is configured to transmit first text, among the text display on the display, to a first external electronic device through the communication circuit, receive, from the first external electronic device, connection information to a second external electronic device corresponding to the first text through the communication circuit, and display, on the display, the received connection information to the second external electronic device.

In accordance with another aspect of the present disclosure, an information providing method of an electronic device is provided. The information includes receiving a user input for selecting at least one application program through a first user interface displayed on a display, displaying text on a second user interface associated with the selected application program, accessing at least a part of the displayed text, comparing the accessed part of the displayed text with at least one template among a plurality of templates stored in a memory, transmitting at least a portion of the accessed part of the displayed text using the communication circuit based on, at least in part, the comparison, receiving data created in relation to the accessed part of the displayed text using the communication circuit, and displaying text or images on the second user interface to overlap, at least in part, the text, wherein each of the templates includes a set of words, phrases, and/or sentences.

According to various embodiments of the present disclosure, when analysing text according to the electronic device and the information-providing method of the electronic device, it is possible to select a service-providing device and to connect to the same based on the analysis result obtained by analysing the necessary part of the text, instead of analysing the full text, thereby providing the user with useful services related to the text.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a network environment according to various embodiments of the present disclosure;
FIG. 2 illustrates a configuration of a communication network according to various embodiments of the present disclosure;
FIG. 3 illustrates a configuration of an electronic device according to various embodiments of the present disclosure;
FIGS. 4A and 4B illustrate configurations of an electronic device and a server according to various embodiments of the present disclosure;
FIGS. 5A and 5B illustrate a set of templates according to various embodiments of the present disclosure;
FIG. 6 is a flowchart illustrating an operation of an electronic device according to various embodiments of the present disclosure;
FIG. 7 is a flowchart illustrating an operation of an electronic device according to various embodiments of the present disclosure;
FIG. 8 illustrates a user interface according to various embodiments of the present disclosure;
FIG. 9 illustrates a user interface according to various embodiments of the present disclosure;
FIG. 10 illustrates a user interface according to various embodiments of the present disclosure;
FIG. 11 is a flowchart illustrating an operation of an electronic device according to various embodiments of the present disclosure;
FIG. 12 illustrates a user interface according to various embodiments of the present disclosure;
FIG. 13 illustrates a user interface according to various embodiments of the present disclosure;
FIG. 14 illustrates a user interface according to various embodiments of the present disclosure;
FIG. 15 illustrates a user interface according to various embodiments of the present disclosure;
FIG. 16 is a diagram illustrating an operation of an electronic device according to various embodiments of the present disclosure;
FIG. 17 illustrates a user interface according to various embodiments of the present disclosure;
FIG. 18 illustrates a user interface according to various embodiments of the present disclosure;
FIG. 19 is a block diagram of an electronic device according to various embodiments of the present disclosure; and
FIG. 20 is a block diagram of a program module according to various embodiments of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

In describing the drawings, similar reference numerals may be used to designate similar constituent elements. The expression "a first", "a second", "the first", or "the second" used in various embodiments of the present disclosure may modify various components regardless of the order and/or the importance but does not limit the corresponding components. When an element (e.g., a first element) is referred to as being "(functionally or communicatively) connected," or "directly coupled" to another element (e.g., a second element), the element may be connected directly to the another element or connected to the another element through yet another element (e.g., a third element).

The expression "configured to" as used in various embodiments of the present disclosure may be interchangeably used with, for example, "suitable for", "having the capacity to", "designed to", "adapted to", "made to", or "capable of' in terms of hardware or software, according to circumstances. Alternatively, in some situations, the expression "device configured to" may mean that the device, together with other devices or components, "is able to". For example, the phrase "processor adapted (or configured) to perform A, B, and C" may mean a dedicated processor (e.g., embedded processor) only for performing the corresponding operations or a generic-purpose processor (e.g., a central processing unit (CPU) or an application processor (AP)) that can perform the corresponding operations by executing one or more software programs stored in a memory device.

An electronic device according to various embodiments of the present disclosure may include at least one of, for example, a smart phone, a tablet personal computer (PC), a mobile phone, a video phone, an electronic book reader (e.g., an e-book reader), a desktop PC, a laptop PC, a netbook computer, a workstation, a server, a personal digital assistant (PDA), a portable multimedia player (PMP), a moving picture experts group (phase 1 or phase 2) (MPEG-1 or MPEG-2) audio layer-3 (MP3) player, a mobile medical device, a camera, and a wearable device. According to various embodiments of the present disclosure, the wearable device may include at least one of an accessory type (e.g., a watch, a ring, a bracelet, an anklet, a necklace, a glasses, a contact lens, or a head-mounted device (HMD)), a fabric or clothing integrated type (e.g., an electronic clothing), a body-mounted type (e.g., a skin pad, or tattoo), and a bio-implantable type (e.g., an implantable circuit). In some embodiments of the present disclosure, the electronic device may include at least one of, for example, a television (TV), a digital video disc (DVD) player, an audio, a refrigerator, an air conditioner, a vacuum cleaner, an oven, a microwave oven, a washing machine, an air cleaner, a set-top box, a home automation control panel, a security control panel, a TV box (e.g., Samsung HomeSync™, Apple TV™, or Google TV™), a game console (e.g., Xbox™ and PlayStation™), an electronic dictionary, an electronic key, a camcorder, and an electronic photo frame.

In other embodiments of the present disclosure, the electronic device may include at least one of various medical devices (e.g., various portable medical measuring devices (a blood glucose monitoring device, a heart rate monitoring device, a blood pressure measuring device, a body temperature measuring device, etc.), a magnetic resonance angiography (MRA), a magnetic resonance imaging (MRI), a computed tomography (CT) machine, and an ultrasonic machine), a navigation device, a global positioning system (GPS) receiver, an event data recorder (EDR), a flight data recorder (FDR), a vehicle infotainment devices, an electronic devices for a ship (e.g., a navigation device for a ship, and a gyro-compass), avionics, security devices, an automotive head unit, a robot for home or industry, an automatic teller's machine (ATM) in banks, point of sales (POS) in a shop, or internet device of things (e.g., a light bulb, various sensors, electric or gas meter, a sprinkler device, a fire alarm, a thermostat, a streetlamp, a toaster, a sporting goods, a hot water tank, a heater, a boiler, etc.). According to some embodiments of the present disclosure, an electronic device may include at least one of a part of furniture or a building/structure, an electronic board, an electronic signature receiving device, a projector, and various types of measuring instruments (e.g., a water meter, an electric meter, a gas meter, a radio wave meter, and the like). In various embodiments of the present disclosure, the electronic device may be flexible, or may be a combination of one or more of the aforementioned various devices. The electronic device according to one embodiment of the present disclosure is not limited to the above described devices. In the present disclosure, the term "user" may indicate a person using an electronic device or a device (e.g., an artificial intelligence electronic device) using an electronic device.

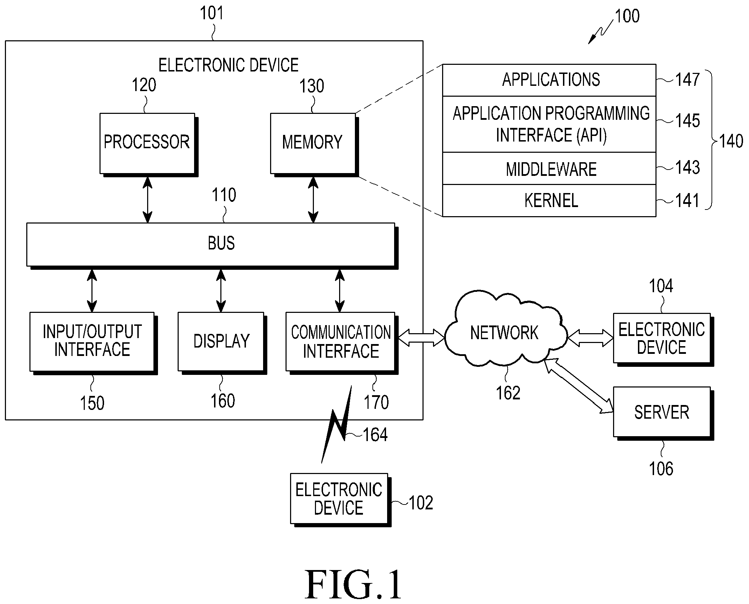

FIG. 1 illustrates a network environment according to various embodiments of the present disclosure.

Referring to FIG. 1, an electronic device 101 in a network environment 100 is disclosed, according to various embodiments. The electronic device 101 may include a bus 110, a processor 120, a memory 130, an input/output interface 150, a display 160, and a communication interface 170. In some embodiments of the present disclosure, the electronic device 101 may exclude one or more elements or may include other optional elements. The bus 110 may include a circuit for connecting the elements 120 to 170 with each other and transferring communication data (e.g., control messages or data) between the elements. The processor 120 may include at least one of a CPU, an AP, or a communication processor (CP). The processor 120, for example, may process a calculation or data that is related to the control and/or communication of one or more other elements of the electronic device 101.

The memory 130 may include a volatile or non-volatile memory. For example, the memory 130 may store instructions or data in relation to one or more other elements of the electronic device 101. According to an embodiment of the present disclosure, the memory 130 may store software or programs 140. For example, the programs 140 may include a kernel 141, middleware 143, an application programming interface (API) 145, and/or an application programs (or "applications") 147. At least some of the kernel 141, the middleware 143, or the API 145 may be referred to as an operating system (OS). The kernel 141, for example, may control or manage system resources (e.g., the bus 110, the processor 120, or the memory 130), which are used to execute the operation or function that is implemented in other programs (e.g., the middleware 143, the API 145, or the application programs 147). In addition, the kernel 141 may provide an interface by which the middleware 143, the API 145, or the application programs 147 may access each element of the electronic device 101 in order to thereby control or manage the system resources.

The middleware 143, for example, may play the intermediate role between the API 145 or the application programs 147 and the kernel 141 to communicate with one another for the transmission and reception of data. In addition, the middleware 143 may process one or more operation requests, which are received from the application programs 147, according to their priorities. For example, the middleware 143 may give priority for using the system resources (e.g., the bus 110, the processor 120, or the memory 130) of the electronic device 101 to the one or more application programs 147, and may process the one or more operation requests. The API 145 may be an interface by which the application programs 147 control functions that are provided by the kernel 141 or the middleware 143, and for example, may include one or more interfaces or functions (e.g., instructions) for file control, window control, image processing, or text control. The input/output interface 150, for example, may transfer instructions or data received from a user or other external devices to other elements of the electronic device 101, or may output instructions or data received from the other elements of the electronic device 101 to the user or other external devices.

The display 160, for example, may include a liquid crystal display (LCD), a light-emitting diode (LED) display, an organic light-emitting diode (OLED) display, a micro-electromechanical system (MEMS) display, or an electronic paper display. For example, the display 160 may display a variety of content (e.g., text, images, videos, icons, and/or symbols) to the user. The display 160 may include a touch screen, and for example, may receive a touch input, a gesture input, a proximity input, or a hovering input using electronic pens or a user's body part. The communication interface 170, for example, may establish communication between the electronic device 101 and external devices (e.g., a first external electronic device 102, a second external electronic device 104, or a server 106). For example, the communication interface 170 may be connected to a network 162 through wireless or wired communication in order to thereby communicate with external devices (e.g., the second external electronic device 104, or the server 106).

For example, the wireless communication may include a cellular communication that uses at least one of long term evolution (LTE), LTE-advanced (LTE-A), code division multiple access (CDMA), wideband CDMA (WCDMA), universal mobile telecommunications system (UMTS), wireless broadband (WiBro), global system for mobile communications (GSM), or the like. According to an embodiment of the present disclosure, the wireless communication, for example, may include a short-range communication 164. The short-range communication 164, for example, may include at least one of wireless fidelity (Wi-Fi), light fidelity (Li-Fi), Bluetooth low-energy (BLE), Zigbee, near field communication (NFC), magnetic secure transmission, radio frequency (RF), or a body area network (BAN). According to an embodiment of the present disclosure, the wireless communication may include global navigation satellite system (GNSS). The GNSS, for example, may be a GPS, a global navigation satellite system (GLONASS), the Beidou navigation satellite system (hereinafter, "Beidou"), Galileo, or the European global satellite-based navigation system. Hereinafter, "GPS" may be used interchangeably with "GNSS" in the present specification. For example, the wired communication may include at least one of a universal serial bus (USB), a high-definition multimedia interface (HDMI), recommended standard 232 (RS-232), power line communication, or a plain old telephone service (POTS). The network 162 may include at least one of the telecommunication networks, such as a computer network (e.g., local area network (LAN) or wide area network (WAN)), the Internet, or a telephone network.

The first and second external electronic devices 102 and 104 may be the same as, similar to, or different from, the electronic device 101 as to the type thereof. According to various embodiments of the present disclosure, at least some, or all, of the operations that are executed by the electronic device 101 may be executed by one or more other electronic devices (e.g., the electronic device 102 or 104, or the server 106). According to an embodiment of the present disclosure, in the case where the electronic device 101 executes a specific function or service automatically or upon request, the electronic device 101 may make a request to the other devices (e.g., the electronic device 102 or 104, or the server 106) for at least some of the functions related to the function or service additionally, or instead of executing the same by itself. Other electronic devices (e.g., the electronic device 102 or 104, or the server 106) may execute the requested function or additional function, and may transfer the result thereof to the electronic device 101. The electronic device 101 may provide the requested function or service by providing the received result without change or by further processing the same. To this end, for example, cloud computing, distributed computing, or client-server computing technology may be used.

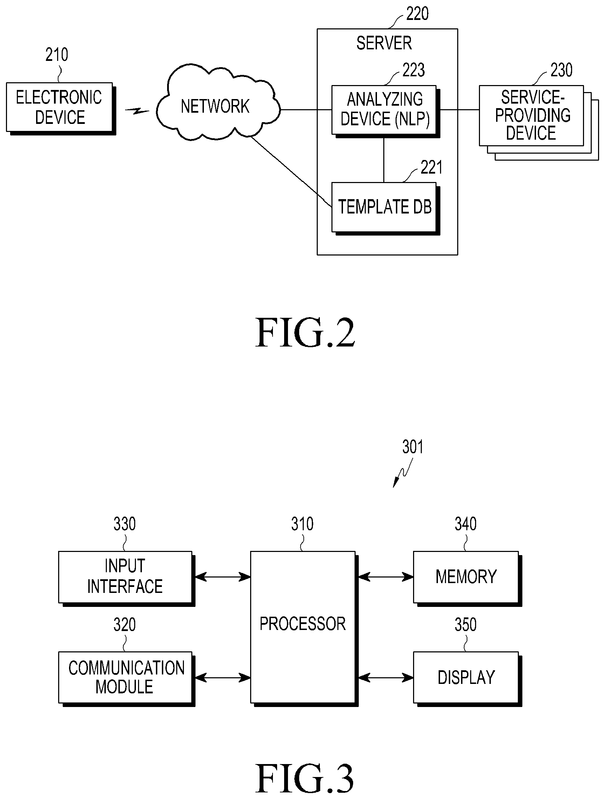

FIG. 2 illustrates a configuration of a communication network system according to various embodiments of the present disclosure.

Referring to FIG. 2, according to various embodiments of the present disclosure, the communication network system may include an electronic device 210 (e.g., the electronic device 101 in FIG. 1), a server 220 (e.g., the server 106 in FIG. 1), and a service-providing device 230.

The electronic device 210 may interwork with the server 220 through a network, such as wireless communication, and may transmit an analysis request to the server 220 in order to analyse a necessary part of the text for data included in transmitted/received messages and the text contained in the voice or text information input by the user. In addition, the electronic device 210 may receive an analysis result from the server 220 and information related to a service, which can be provided by a service-providing device selected based on the analysis result, in response to the analysis request, and may display the same on a user interface for an executed application program. The service-related information may include address information of the service-providing device, the type of service provided by the service-providing device, and application-related information for executing the service provided by the service-providing device 230.

In addition, the electronic device 210 may display the received service-related information in a portion of the user interface using at least one of images, text, or buttons. The electronic device 210 may automatically or manually connect to the service-providing device 230 based on the displayed service-related information, and may be provided with the service from the service-providing device 230 when the connection to the service-providing device 230 is made.

The server 220 may include a template database 221, may analyse the part of the text transmitted from the electronic device 210 using an analysing device (e.g., the natural language processing (NLP) 223), may select the service-providing device 230 related to the analysis result, and may transmit, to the electronic device 210, information related to the service provided by the selected service-providing device.

FIG. 3 illustrates a configuration of an electronic device according to various embodiments of the present disclosure.

Referring to FIG. 3, according to various embodiments of the present disclosure, an electronic device 301 (the same as or similar to the electronic device 101 in FIG. 1 or the electronic device 210 in FIG. 2) may include a processor 310, a communication module 320, an input interface 330, a memory 340, and a display 350.

According to various embodiments of the present disclosure, the processor 310 (the same as or similar to the processor 120 in FIG. 1) of the electronic device 301 may process information on the operation of the electronic device, programs, applications, or information on the execution of functions. The processor 310 may control operations of the communication module 320 connecting to a base station, the input interface 330, the memory 340, and the display 350.

According to various embodiments of the present disclosure, the processor 310 may interwork with a server (the same as or similar to the server 220 in FIG. 2) located in the network, and may perform control so as to transmit and receive messages between the users. The processor 310 may be connected to a service-providing device (the same as or similar to the service-providing device 230 in FIG. 2), which is selected by the server, to be provided with a service.

According to various embodiments of the present disclosure, when at least one application program is executed, the processor 310 may display, on the display 350, a user interface for the executed application program. The processor 310 may display messages transmitted/received through the application program or input information on the user interface. The transmitted/received messages or input information may contain at least one of text, voice, or images.

According to various embodiments of the present disclosure, the processor 310 may transmit a part of the text, which is displayed on the user interface displayed on the display 350, to a first external electronic device (e.g., the server 106 in FIG. 1 or the server 220 in FIG. 2, hereinafter, referred to as a server). The processor 310 may receive information (e.g., connection information, service information provided by the service-providing device, and the like) in relation to a second external electronic device (e.g., the service-providing device 230 in FIG. 2, hereinafter, referred to as a service-providing device) according to the analysis result of a part of the text transmitted to the server, and may display the received information related to the service-providing device on the user interface displayed on the display 350.

According to various embodiments of the present disclosure, the processor 310 may perform control so as to select at least one application program for the monitoring of text analysis.

According to various embodiments of the present disclosure, in order to identify a part of the text to be transmitted to the server, the processor 310 may monitor the text displayed on the user interface in order to thereby detect a part of the text necessary for analysis. In addition, the processor 310 may compare the text displayed on the user interface with a plurality of templates included in a set of templates stored in the memory 340. The set of templates may be controlled so as to be downloaded from the server or another external device and thus be stored in the memory 340 in advance. The processor 310 may identify a word contained in the displayed text, which matches at least one template. The processor 310 may identify a weight point, which is set to the template matching the identified word, and may identify a part of the text for the analysis request from the text based on the identified weight point. According to an embodiment of the present disclosure, the processor 310 may set a portion of the user interface as an analysis range of the text, among the text displayed on the user interface, based on the identified weight point, and may transmit, to the server, a part of the text belonging to the set analysis range. The processor 310 may perform control so as to transmit, to the server, at least a part of the text corresponding to the set analysis range, and so as to receive information related to a service provided from a service-providing device selected by the server based on the analysis result of at least a part of the text. The processor 310 may perform control so as to display the received service-related information on the user interface.

According to various embodiments of the present disclosure, if there are two or more weight points corresponding to the words matching the stored set of templates, the processor 310 may calculate the sum of the weight points, and if the calculated sum of the weight points is greater than a predetermined trigger weight point, the processor 310 may set an analysis range for the analysis request for the text. When a part of the text corresponding to the analysis range is transmitted to the server, the processor 310 may initialize the sum of the weight points to zero. As a word matching the template stored in the memory is detected, the processor 310 may set a start point corresponding to the time at which the sum of the weight points becomes equal to or greater than zero. In addition, the processor 310 may calculate the sum of the weight points corresponding to words that are detected after the start point, and may set an end point corresponding to the time at which the sum of the weight points exceeds a trigger weight point. The processor 310 may set an analysis range for the text so as to range from the sentence displayed on the user interface corresponding to the start point to the sentence displayed on the user interface corresponding to the end point.

According to various embodiments of the present disclosure, the processor 310 may perform control so as to connect to the service-providing device based on the received service-related information, and so as to execute the service provided from the connected service-providing device.

According to various embodiments of the present disclosure, when the sum of the weight points for the type of service exceeds a trigger weight point, and when an analysis request for the analysis range of the text fails, the processor 310 may perform control so as to update the template for the type of service based on the part of the text corresponding to the analysis range.

According to various embodiments of the present disclosure, if there is a word in the text, which cannot be expressed as a regular expression, the processor 310 may identify a weight point of the word, which cannot be expressed as a regular expression, using a separate lexicon database (DB).

According to various embodiments of the present disclosure, the processor 310 may perform control so as to display, on the user interface to overlap, at least in part, the same, a guidance window to inquire whether to access or install a recommended application related to the service provided by the service-providing device selected by the server according to the analysis result of a part of the text.

According to various embodiments of the present disclosure, the processor 310 may be a hardware module or a software module (e.g., application program), or may be a hardware element (function) or a software element (program), which includes at least one of various sensors, data-measuring modules, input/output interfaces, modules for managing the state or environment of the electronic device, or a communication module, which are provided in the electronic device.

According to various embodiments of the present disclosure, the communication module 320 (e.g., the communication interface 170 in FIG. 1) of the electronic device may communicate with other electronic devices (e.g., the electronic device 102 or 104 or the server 106 in FIG. 1, or the server 220 or the service-providing device 230 in FIG. 2), which are located within the communication network, under the control of the processor 310. According to various embodiments of the present disclosure, the communication module 320 may transmit/receive, to/from other electronic devices, data (e.g., data related to an electronic purchasing service) associated with the operation performed by the control of the processor 310. The communication module 320 may conduct communication through a network or through a device-to-device connection using wireless or wired communication through a communication interface. The wireless communication may include at least one of, for example, Wi-Fi, Bluetooth (BT), Zigbee, Z-wave, NFC, a GPS, or a cellular communication (e.g., at least one of LTE, LTE-A, LTE- unlicensed (LTE-U), licensed-assisted access (LAA), CDMA, WCDMA, UMTS, WiBro, or GSM). The wired communication may include at least one of, for example, a USB, an HDMI, RS-232, a POTS, a universal asynchronous receiver transmitter (UART), an inter-integrated circuit (I2C), an serial peripheral interface (SPI), or a controller area network (CAN). Further, the communication module 320 may include any other communication methods, which are well-known or will be developed in time to come, in addition to the communication methods described above. According to various embodiments of the present disclosure, under the control of the processor 310, the communication module 320 may transmit, to the server, a part of the text included in the identified analysis range, may receive, from the server, information related to a service provided by a service-providing device selected by the server, and may receive service information provided from the service-providing device while being connected with the service-providing device.

According to various embodiments of the present disclosure, the input interface 330 (the same as or similar to the input/output interface 150 in FIG. 1) may transmit, to the processor 310, signals input in relation to a variety of information, such as numbers and text input by the user, various function settings, and function control of the electronic device 301. In addition, the input interface 330 may support a user input to execute an application for supporting a particular function. The input interface 330 may include at least one of a key input means, such as a keyboard or a keypad, a touch input means, such as a touch sensor or a touch pad, a voice input means, various sensors, or a camera, and may further include a gesture input means. In addition, the input interface 330 may include any type of input means that is currently under development or will be developed in the future. Furthermore, according to various embodiments of the present disclosure, the input interface 330 may receive a user interface input according to information input by the user through the touch panel of the display 350, and may transmit the same to the processor 310.

According to various embodiments of the present disclosure, the memory 340 (e.g., the memory 130 in FIG. 1) of the electronic device 301 may temporarily store programs necessary for functional operations according to various embodiments and a variety of data generated during the execution of the programs. The memory 340 may mainly have a program area and a data area. The program area may store information related to the operation of the electronic device 301, such as an OS for booting the electronic device 301. The data area may store data, which is transmitted, received, or generated, according to various embodiments. In addition, the memory 340 may be configured to include at least one storage medium, such as a flash memory, a hard disk, a multimedia card micro-type memory (e.g., a secure digital (SD) or extreme digital (xD) memory), a random access memory (RAM), or a read only memory (ROM). According to various embodiments of the present disclosure, the memory 340 may include a DB that stores a set of templates downloaded from the server.

According to various embodiments of the present disclosure, the display 350 (the same as or similar to the display 160 in FIG. 1) may display operation execution information and operation execution result information according to the control of an operation executer (not shown). The display 350 may display a user interface for at least one executed application program, and may display, on the displayed user interface, transmitted/received messages or data contained in the input information (e.g., text or images). In addition, in the case where the display 350 is implemented in the form of a touch screen, it may correspond to a touch screen of the input interface 330. In this case, the display 350 may display a variety of information generated according to user's touch operation.

In addition, according to various embodiments of the present disclosure, the display 350 may be configured using at least one of a LCD, a thin-film transistor LCD (TFT-LCD), an OLED, a LED, an active matrix organic LED (AMOLED), a flexible display, and a three-dimensional display. Furthermore, some of these displays may be implemented as a transparent type or a light-transmission type so that they may be seen through, which may be configured in the form of a transparent display including a transparent OLED (TOLED).

Until now, the main elements of the electronic device 301 have been described with reference to the electronic device 301 of FIG. 3, according to various embodiments of the present disclosure. However, in various embodiments of the present disclosure, not all the elements shown in FIG. 3 are essential, and the electronic device 301 may be implemented by adding other elements thereto or by excluding some of the elements. In addition, the positions of the main elements of the electronic device 301 described above with reference to FIG. 3 may vary depending on various embodiments.

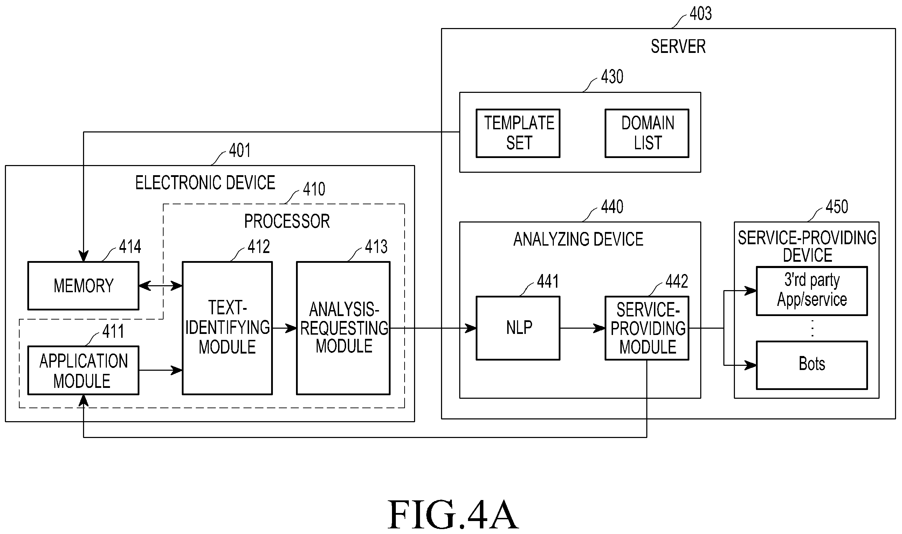

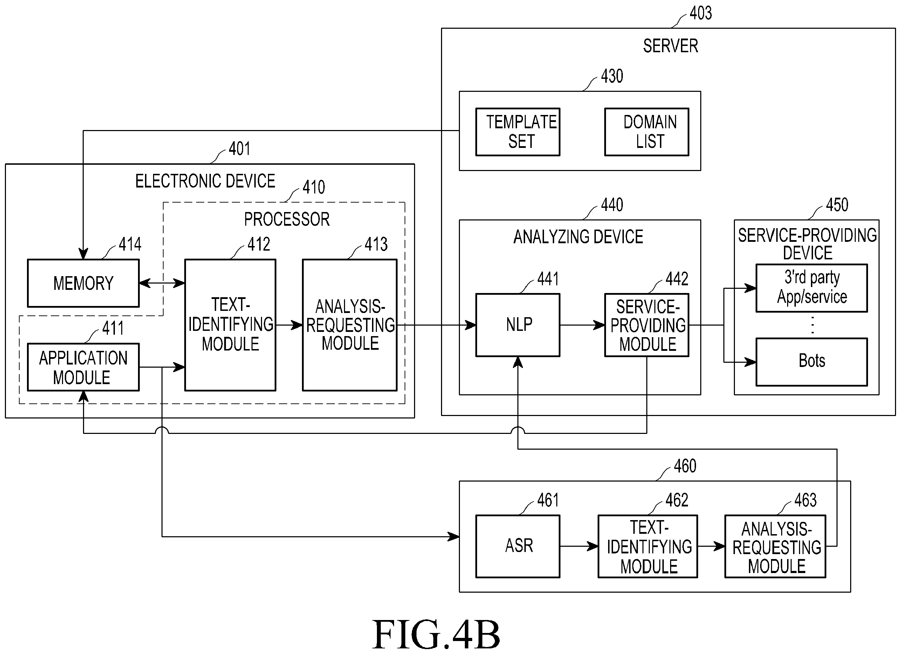

FIGS. 4A and 4B illustrate configurations of an electronic device and a server according to various embodiments of the present disclosure.

Referring to FIG. 4A, a processor 410 (e.g., the processor 120 of FIG. 1 or the processor 310 in FIG. 3) of an electronic device 401 (e.g., the electronic device 101 in FIG. 1, the electronic device 210 in FIG. 2, or the electronic device 301 in FIG. 3), according to various embodiments of the present disclosure, may include an application module 411, a text-identifying module 412 (for example, a trigger point detector), or an analysis-requesting module 413 (for example, text extractor) in order to monitor the text displayed on the user interface, thereby detecting a part of the text that needs to be analysed.

According to various embodiments of the present disclosure, the electronic device 401 may conduct an operation for receiving a service related to information (e.g., text) requested for analysis by the processor 410 in association with a server 403. In addition, the electronic device 401 may download a service list (e.g., a domain list) and a set of templates, which are managed in a template DB 430 of the server 403, and may store the same in a memory 414. When the type of service is changed, the electronic device 401 fails to make a request for the text analysis, or the electronic device 401 fails to receive service-related information, the electronic device 401 may update the template DB stored in the memory 414, and may transmit update information to the server 403 so that the template DB 430 of the server 403 can be updated. The template DB stored in the memory 414 and the template DB 430 of the server 403 may be synchronized with each other.

The application module 411, which is intended to manage and execute one or more application programs, may perform control so as to display, on the user interface displayed on the display, information (text or voice information) that is transmitted/received or input through at least one executed application program. The at least one application program may include an application program, a service, or a Chatbot for transmitting and receiving messages, which may be, for example, an SNS, e-mail, a call application, or a voice assistant. If the input information is voice in lieu of text, text may be analysed from the voice using automated speech recognition (ASR). To this end, the processor may include a separate ASR module, or may include a function for voice conversion in the application module 411.

The text-identifying module 412 may monitor the text displayed on the user interface associated with at least one application program executed by the application module 411. The text-identifying module 412 may compare the monitored text with a set of templates stored in the memory 414 in order to thereby determine whether there is a word in the text, which matches the set of templates. According to an embodiment of the present disclosure, for example, if the at least one application program is an application for transmitting and receiving conversation messages, the text-identifying module 412 may monitor data in the form of text contained in the transmitted/received conversation messages when the conversation messages are transmitted/received. According to an embodiment of the present disclosure, the text-identifying module 412 may monitor the conversation messages displayed on the user interface in a predetermined period. According to an embodiment of the present disclosure, when a request is received from the user, the text-identifying module 412 may monitor the conversation messages displayed on the user interface.

If there is a word in the conversation message (e.g., text) monitored by the text-identifying module 412, which matches the set of templates, the analysis-requesting module 413 may determine whether at least one conversation message related to the matching word needs to be analysed. Then, if it is determined that the conversation message needs to be analysed, the analysis-requesting module 413 may perform control so as to transmit, to the server, a message requesting analysis of the conversation message to be analysed. The message for analysis request may contain at least one piece of data corresponding to the at least one conversation message to be analysed (e.g., a part of the text), information indicating the type of service of the template matching the word among the compared set of templates, identification information of the electronic device, or analysis request indication information.

The analysis-requesting module 413 may extract at least one word from the words contained in the monitored conversation message, except for proper nouns or general nouns, and may identify the type of service in relation to the at least one extracted word. The analysis-requesting module 413 may determine whether there is a regular expression that matches the extracted word in the templates included in the set of templates, which corresponds to the identified type of service. The analysis-requesting module 413 may identify a weight point, which is set to the identified regular expression, and may determine whether the conversation message needs to be analysed based on the identified weight point. According to an embodiment of the present disclosure, the analysis-requesting module 413 may determine whether the identified weight point or the sum of the identified weight points is equal to or greater than a predetermined trigger weight point, and may set an analysis range in the user interface displaying the transmitted/received conversation messages, and may further set at least one conversation message included in the set analysis range as the text to be analysed.

Referring to FIG. 4B, the processor 410 (e.g., the processor 120 of FIG. 1 or the processor 310 in FIG. 3) of the electronic device 401 (e.g., the electronic device 101 in FIG. 1, the electronic device 210 in FIG. 2, or the electronic device 301 in FIG. 3), according to various embodiments of the present disclosure, may perform the operation the same as or similar to the operation of the electronic device 401 of FIG. 4A when text data is contained in the transmitted/received message, and may transmit voice information to the server 403 so that the voice information is converted into text information when voice data is contained in the transmitted/received message. The server 403 may include a voice converter 460 that includes an ASR 461, a text-identifying module 462 (for example, a trigger point detector), and an analysis-requesting module 463 (for example, text extractor). The voice converter 460 of the server 403 may convert the received voice information into text information, and may identify a part of text information, which needs to be analysed, from the converted text information, and may further transmit the identified part of the text information to an analysing device 440.

Referring to FIGS. 4A and 4B, the server 403 may analyse the information (a part of text) requested for analysis using the NLP 441 (e.g., conversation analysis, semantic search, parsing, classification, or clustering) by the analysing device 440, may select at least one service-providing device 450 related to the analysis result from among a plurality of service-providing devices 450 interworking with a service-providing module 442, and may transmit, to the electronic device 401, information related to the service provided by the at least one selected service-providing device 450 (e.g., information on access to the service-providing device or the service thereof).

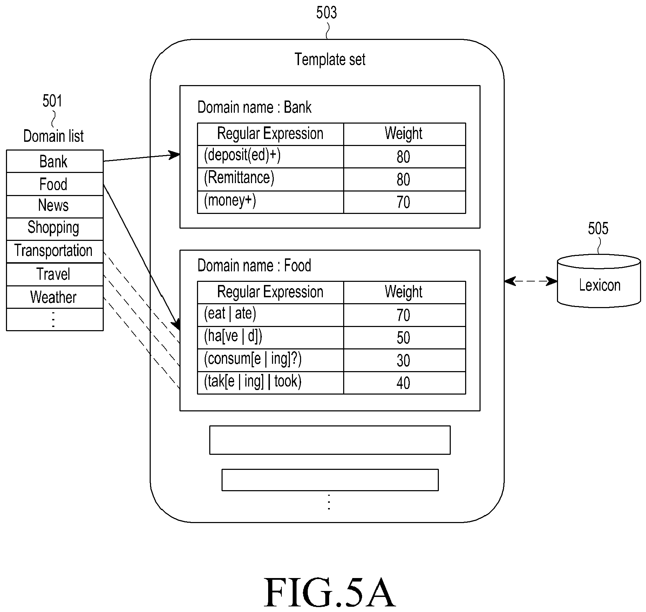

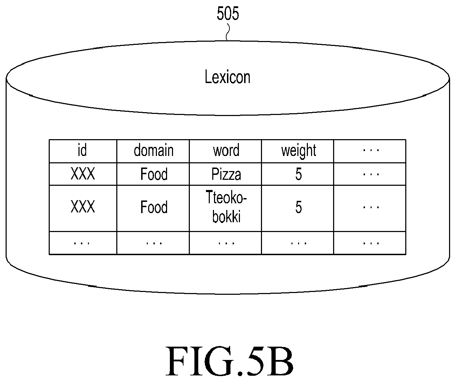

FIGS. 5A and 5B illustrate a set of templates according to various embodiments of the present disclosure.

Referring to FIG. 5A, a set of templates 503 may include information indicating the type of service (e.g., domain names), a plurality of regular expressions, and weight points set to the plurality of regular expressions for the respective services included in a service list 501 (e.g., a domain list). The set of templates 503 may be created, set up, and managed by the server, and the electronic device may download and store the set of templates 503 managed by the server. The set of templates 503 may be associated with the service-providing device in the server, and may be updated depending on the services provided by the service-providing device. In addition, the set of templates 503 may be updated based on lexical information provided from a lexicon DB 505 managed by the server or another external device. The service list 501 may include information (e.g., bank, food, news, shopping, travel, weather, etc.) indicating the types of services (domains). For example, if the service relates to finance (bank), the template for the finance in the set of templates may include, for example, the regular expressions of which the weight points are set to 80 (e.g., "deposit(ed)+" and "remittance") and the regular expression of which the weight point is set to 70 (e.g., "money+"). In addition, if the service relates to, for example, food, the template for the food in the set of templates may include, for example, the regular expressions, such as "eat", "have", "take", "consume", or the like. The weight point is set in an order of a highest expression rate, so that the regular expression that best expresses the meaning of the service (i.e., the regular expression having a highest expression rate) may have a highest weight point.

Referring to FIG. 5B, the words contained in the text displayed on the user interface, which cannot be compared with the set of templates (e.g., proper nouns or general nouns that cannot be set as regular expressions), may be retrieved from the lexicon DB 505. The lexicon DB 505 may include words of which the weight points are set depending on the type of service (domain).

An electronic device, according to any one of various embodiments of the present disclosure, may include a housing, a touch screen display that is exposed through a portion of the housing, a wireless communication circuit that is located inside the housing,; a processor that is located inside the housing and is operatively or electrically connected to the display and the communication circuit, and a memory that is located inside the housing and is electrically connected to the processor, wherein the memory stores a plurality of templates, each template including a set of words, phrases, and/or sentences, and wherein the memory stores at least one application program configured to process and display text data. The memory may store instructions that allow the processor to: receive a user input for selecting at least one application program through a first user interface displayed on the display, display text, which is input through the display or is received using the communication circuit, on a second user interface associated with the selected application program, access at least a part of the displayed text, compare the accessed part of the displayed text with at least one template, transmit at least a portion of the accessed part of the displayed text using the communication circuit based on, at least in part, the comparison, receive data created in relation to the accessed part of the displayed text using the communication circuit, and display text and/or images on the second user interface to overlap, at least in part, the same.

According to various embodiments of the present disclosure, the first user interface may not be a part of at least one application program.

According to various embodiments of the present disclosure, the at least one application program may include a text-messaging application program, an email application program, an instant-messaging program and/or a social media service (SMS) application program.

According to various embodiments of the present disclosure, the at least one application program may be downloaded from App Store.

According to various embodiments of the present disclosure, the instructions may include at least a portion of the Android OS, and the instructions may allow an accessible manager of the Android OS to access at least a part of the text displayed on the second user interface.

According to various embodiments of the present disclosure, the instructions may include a software program configured to convert text to voice, and the instructions may allow the software program to access at least a part of the text displayed on the second user interface.

According to various embodiments of the present disclosure, the instructions may allow the processor to display a window including the text and/or images positioned on the second user interface.

An electronic device, according to any one of various embodiments of the present disclosure, may include a housing, a touch screen display that is exposed through a portion of the housing, a wireless communication circuit that is located inside the housing, a processor that is located inside the housing and is operatively or electrically connected to the display and the communication circuit, and a memory that is located inside the housing and is electrically connected to the processor, wherein the memory stores a plurality of templates, each template including a set of words, phrases, and/or sentences, wherein the memory stores at least one application program configured to process and display text data, and wherein the memory stores instructions that allow the processor to: receive a user input for selecting at least one application program through a first user interface displayed on a display, display text, which is input through the display or is received using a communication circuit, on a second user interface associated with the selected application program, access at least a part of the displayed text using a software program that converts voice to text, compare the accessed part of the displayed text with at least one template, transmit at least a portion of the accessed part of the displayed text using the communication circuit based on, at least in part, the comparison, receive data created in relation to the accessed part of the displayed text using the communication circuit, and display text and/or images on the second user interface to overlap, at least in part, the same.

An electronic device, according to any one of various embodiments of the present disclosure, may include a housing, a touch screen display that is exposed through a portion of the housing, a wireless communication circuit that is located inside the housing, a processor that is located inside the housing and is operatively or electrically connected to the display and the communication circuit, and a memory that is located inside the housing and is electrically connected to the processor, wherein the memory stores a plurality of templates, each template including a set of words, phrases, and/or sentences, wherein the memory stores at least one application program configured to process and display text data, and wherein the memory stores instructions that allow the processor to: display, on the user interface, text that is input through the display or is received using the communication circuit, access at least a part of the displayed text using the application program, compare the accessed part of the displayed text with at least one template, transmit at least a portion of the accessed part of the displayed text using the communication circuit based on, at least in part, the comparison, receive data created in relation to the accessed part of the displayed text using the communication circuit, and display text and/or images on the user interface to overlap, at least in part, the same.

An electronic device, according to any one of various embodiments of the present disclosure, may include a display, a communication circuit, and a processor that is operatively or electrically connected to the display and the communication circuit, wherein the processor is configured to transmit first text, among the text display on the display, to a first external electronic device through the communication circuit, receive, from the first external electronic device, connection information to a second external electronic device corresponding to the first text through the communication circuit, and display, on the display, the received connection information to the second external electronic device.

According to various embodiments of the present disclosure, the display may be a touch screen, and when the connection information to the second external electronic device displayed on the display is touched, the electronic device may be connected to the second external electronic device using the communication circuit.

According to various embodiments of the present disclosure, the processor may be configured to determine a first service related to the first text and to transmit information about the first text and the first service to the first external electronic device, and the connection information to the second external electronic device may be information corresponding to the first text and the first service.

According to various embodiments of the present disclosure, the processor may be configured to compare the text displayed on a user interface for at least one application program displayed on the display with a set of templates stored in the memory, determine whether there is a word in the text, which matches the set of templates, if there is a word matching the set of templates, obtain a weight point corresponding to the matching word from the set of templates, and identify the first text based on the obtained weight point.

According to various embodiments of the present disclosure, the set of templates may include a plurality of templates set for each type of service, and wherein each of the plurality of templates may include one or more regular expressions having different weight points and weight points set to the one or more regular expressions.

According to various embodiments of the present disclosure, the processor may be configured to if there is, in the text, a word that matches at least one template among the set of templates, obtain a weight point set to the at least one template matching the word, if there are two or more obtained weight points, calculate the sum of the weight points, and if the calculated sum of the weight points is greater than a predetermined trigger weight point, identify the first text for analysis request.

According to various embodiments of the present disclosure, the processor may set, as the first text, the text included in the range from the sentence containing a word that is detected when the sum of the weight points is equal to or greater than zero to the sentence containing a word that is detected when the sum of the weight points is equal to or greater than the trigger weight point.

According to various embodiments of the present disclosure, the processor may perform control so as to update the template for the type of service based on a part of the text corresponding to the analysis range when the sum of the weight points for the type of service exceeds a trigger weight point and when an analysis request for the analysis range of the text is failed.

According to various embodiments of the present disclosure, if there is a word in the text, which cannot be expressed as a regular expression, the processor may identify a weight point of the word, which cannot be expressed as a regular expression, using a separate lexicon DB.

According to various embodiments of the present disclosure, the processor may display, on the user interface, a guidance window to inquire whether to access or install a recommended application related to the service provided by the second external electronic device selected by the first external electronic device according to the analysis result of a part of the text so as to overlap, at least in part, the user interface.

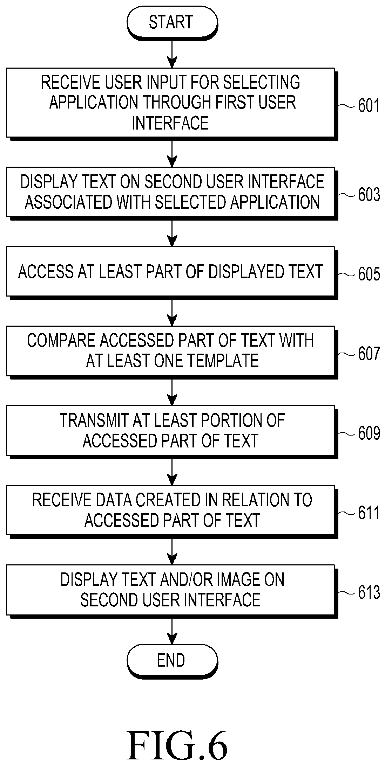

FIG. 6 is a flowchart illustrating an operation of an electronic device according to various embodiments of the present disclosure.

Referring to FIG. 6, according to various embodiments of the present disclosure, in operation 601, the electronic device (e.g., the electronic device 101 in FIG. 1, the electronic device 210 in FIG. 2, the electronic device 301 in FIG. 3, or the electronic device 401 in FIGS. 4A and 4B) may receive a user input for selecting at least one application program through a first user interface displayed on the display (the display 160 in FIG. 1 or the display 350 in FIG. 3).

In operation 603, the electronic device may display text on a second user interface displayed on the display (the display 160 in FIG. 1 or the display 350 in FIG. 3) associated with the selected application program. The text may be input through the display, or may be received using the communication circuit. According to various embodiments of the present disclosure, the second user interface may be displayed on the display so as to be adjacent to the area in which the first user interface is displayed. According to various embodiments of the present disclosure, the second user interface may be displayed on a separate display from the display on which the first user interface is displayed.

In operation 605, the electronic device may access at least a part of the displayed text.

In operation 607, the electronic device may compare the accessed part of the displayed text with at least one template. One or more templates may be stored in the memory (e.g., the memory 130 in FIG. 1 or the memory 340 in FIG. 3), and the respective templates stored in the memory 340 may include a set of words, phrases, and/or sentences.

In operation 609, the electronic device may transmit, to the server (e.g., the server 403 in FIGS. 4A and 4B), at least a portion of the accessed part of the displayed text using the communication circuit based on, at least in part, the comparison above.

In operation 611, the electronic device may receive, from the server, data created in relation to the accessed part of the displayed text using the communication circuit.

In operation 613, the electronic device may display text and/or images on the second user interface to overlap, at least in part, the same.

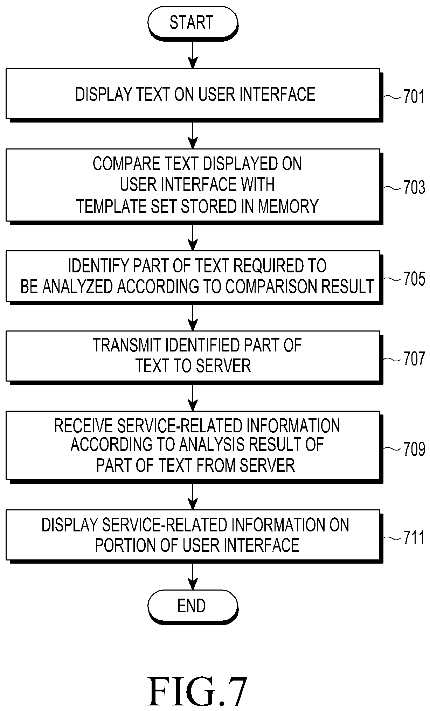

FIG. 7 is a flowchart illustrating an operation of an electronic device according to various embodiments of the present disclosure.

Referring to FIG. 7, according to various embodiments of the present disclosure, in operation 701, the electronic device (e.g., the electronic device 101 in FIG. 1, the electronic device 210 in FIG. 2, the electronic device 301 in FIG. 3, or the electronic device 401 in FIGS. 4A and 4B) may display, on the display, a user interface for at least one application program, and may display, on the user interface, text and/or images corresponding to information transmitted/received or input according to the execution of the application program. The electronic device may monitor the text displayed on the user interface.

In operation 703, the electronic device may read the text displayed on the user interface, and may compare the text with a set of templates stored in the memory. In operation 705, the electronic device may identify a part of the text that needs to be analysed according to the comparison result. A detailed description of identifying a part of the text to be analysed will be made with reference to the subsequent drawings.

In operation 707, the electronic device may transmit the identified part of the text to the server in order to analyse the same.

In operation 709, the electronic device may receive, from the server, information related to a service (e.g., information on access to a service-providing device or a service thereof), which can be provided by the service-providing device selected by the server according to the analysis of the part of the text.

In operation 711, the electronic device may display the received service-related information in a portion of the user interface on which the text is being displayed.

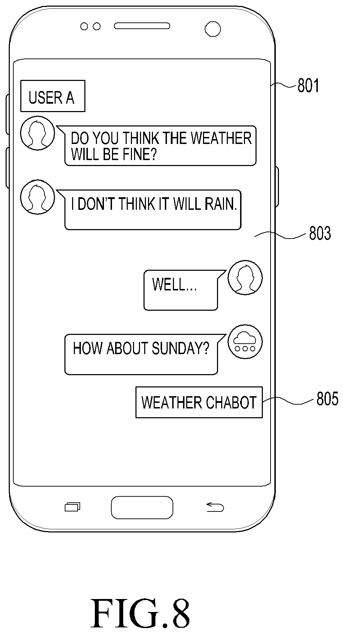

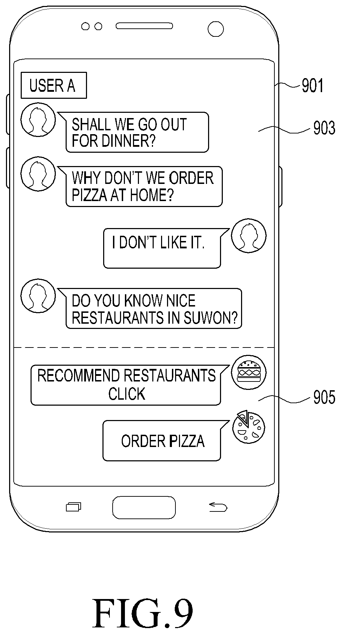

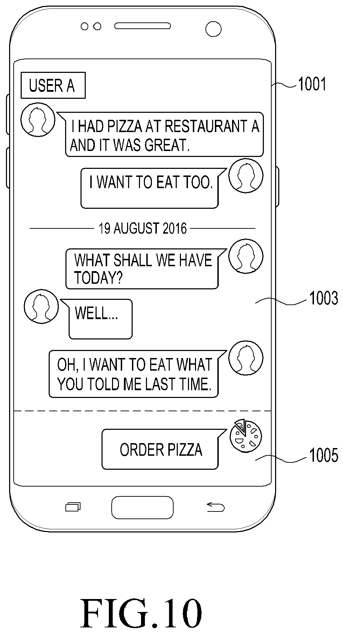

FIG. 8 illustrates a user interface according to various embodiments of the present disclosure, and FIG. 9 illustrates a user interface according to various embodiments of the present disclosure. In addition, FIG. 10 illustrates a user interface according to various embodiments of the present disclosure.

Referring to FIGS. 8, 9, and 10, for example, when an application program regarding conversation messages is executed, the electronic device (e.g., the electronic device 101 in FIG. 1, the electronic device 210 in FIG. 2, the electronic device 301 in FIG. 3, or the electronic device 401 in FIGS. 4A and 4B), according to various embodiments of the present disclosure, may display a user interface 801, 901, or 1001 for the executed application program on the display, and may display transmitted/received conversation messages 803, 903, or 1003 on the displayed user interface 801, 901, or 1001. The conversation messages 803, 903, or 1003 may contain data in the form of text, voice, or an image, and may display the data using text or images. The text may refer to a combination of words, numbers, a space, and special characters. In various embodiments of the present disclosure, the text may refer to phrases and sentences displayed on the user interface 801, 901, or 1001, which contain words, numbers, a space, or special characters.

The electronic device may monitor words in the text displayed on the user interface 801, 901, or 1001 (e.g., in the text included in the transmitted/received conversation messages 803, 903, or 1003) in order to thereby detect the words that match at least one template among the set of templates, and may transmit, to the server, at least one conversation message containing the detected words. The electronic device may receive, from the server, information 805, 905, or 1005 related to the service resulting from the analysis of the transmitted conversation message, and may display the same on the user interface 801, 901, or 1001.

As shown in FIG. 8, if the service stemming from the words identified from the conversation messages 803 displayed on the user interface 801 relates to the weather, in order to provide a weather-related service, the electronic device may display, on the user interface 801, information 805 on access to the weather-related service in addition to the conversation messages 803. The information 805 on access to the weather-related service, for example, may represent information on access to a weather application program (e.g., a weather Chabot), which provides the weather-related service, or address information of a device providing the weather-related service.

As shown in FIG. 9, if the service stemming from the words identified from the conversation messages 903 displayed on the user interface 901 relates to the food, in order to provide a food-related service, the electronic device may display, on the user interface 901, information 905 on access to the food-related service (e.g., a service of ordering or recommending food) in addition to the conversation messages 903. The information 905 on access to the food-related service, for example, may represent information on access to an application program (e.g., a food-recommending and/or ordering application program), which provides the food-related service, or address information of a device providing the food-related service.

In addition, as shown in FIG. 10, the electronic device may retrieve conversation messages 1003, which have been previously transmitted/received and stored, on the user interface 1001, and may display the retrieved conversation messages 1003 on the user interface 1001. Furthermore, the electronic device may display the service-related information 1005 (e.g., information on pizza order) provided by the server according to the result of analysing a part of the previous conversation messages 1003 displayed on the user interface 1001.

The electronic device may associate the application program indicated by the service-related information with the currently running application program for the user interface so that the service information can be provided through the user interface of the currently running application program even without displaying a user interface for the application program indicated by the service-related information.

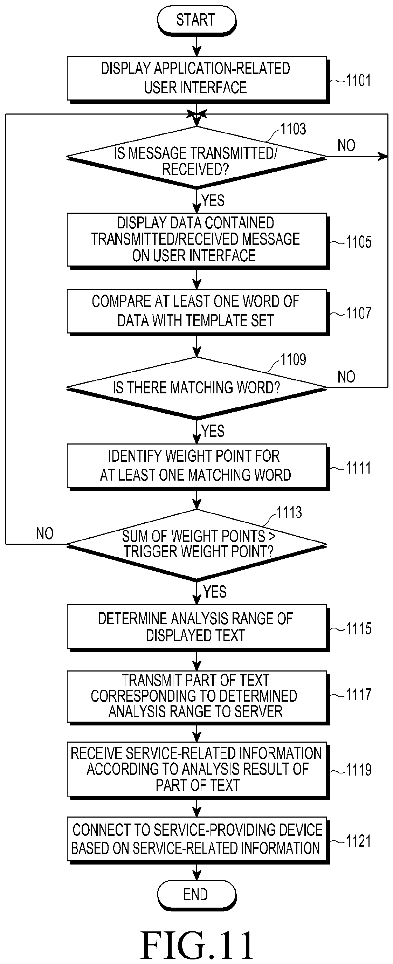

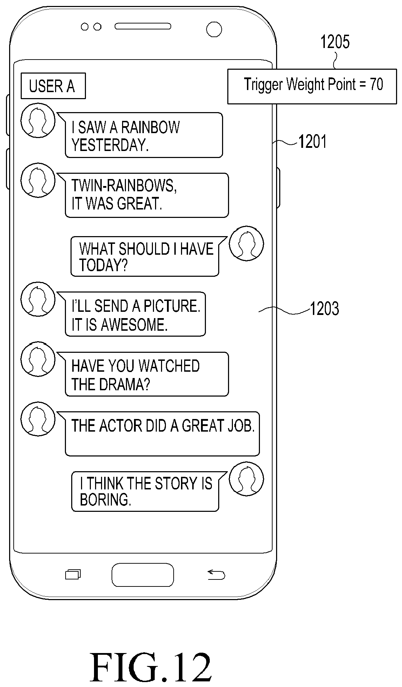

FIG. 11 is a flowchart illustrating an operation of an electronic device according to various embodiments of the present disclosure, and FIG. 12 illustrates a user interface according to various embodiments of the present disclosure.

Referring to FIG. 11, according to various embodiments of the present disclosure, in operation 1101, the electronic device (e.g., the electronic device 101 in FIG. 1, the electronic device 210 in FIG. 2, the electronic device 301 in FIG. 3, or the electronic device 401 in FIGS. 4A and 4B) may display a user interface for the executed application program on the display. The executed application program, for example, may be an application for transmitting/receiving conversation messages, and the operation in FIG. 11 will be described with reference to an example in which the application program for transmitting/receiving conversation messages between the users is executed.

In operation 1103, the electronic device may determine whether a conversation message has been transmitted or received between the users through the user interface according to the execution of the application program. If no message has been transmitted or received as a result of the determination, the electronic device may continue to determine the transmission/reception of the message in operation 1103. If the message has been transmitted or received, the electronic device may perform operation 1105.

In operation 1105, the electronic device may display data contained in the transmitted or received message on the user interface, and may monitor the data displayed on the user interface. The data contained in the message may include at least one of text, special characters, images, or voice, and the data contained in the message may be displayed as text and/or images on the user interface. As shown in FIG. 12, when an application program associated with the conversation message is executed, the electronic device performing the operation of FIG. 11 may display a user interface 1201 for the executed application on the display, and may display the transmitted/received conversation messages 1203 on the user interface 1201. The electronic device may set a trigger weight point 1205 (e.g., 70) for determining the analysis range of the text for analysis request.

In operation 1107, the electronic device may read the text displayed on the user interface, and may compare the text with a set of templates stored in the memory.

In operation 1109, the electronic device may determine whether there is, in the text, a word that matches at least one template among the set of templates based on the comparison result. As a result of the determination, if there is no matching word, the electronic device may perform operation 1103. If there is a matching word, the electronic device may perform operation 1111.

In operation 1111, the electronic device may identify a weight point for at least one word that matches the template. The electronic device may identify a weight point that is set to the regular expression contained in the template corresponding to the matching word. In the case where there are a plurality of matching words or there are weight points that have been previously identified, the electronic device may calculate the sum of the weight points. According to an embodiment of the present disclosure, if the text displayed on the user interface contains a word that cannot be compared with the set of templates, the electronic device may identify a weight point, which is set to the matching word, from a separate lexicon DB. The electronic device may calculate the sum of weight points by summating the weight point identified from the set of templates and the weight point identified from the lexicon DB. According to an embodiment of the present disclosure, the electronic device may monitor data displayed on the user interface screen every time a new conversation message is displayed, evert time a predetermined number of conversation messages are displayed, or in a predetermined period of time in order to thereby identify the weight points of the words of the displayed text.

In operation 1113, the electronic device may determine whether the sum of the weight points is equal to or greater than a predetermined trigger weight point (e.g., the trigger weight point 1205 in FIG. 12). If the sum of the weight points is less than the trigger weight point as a result of the determination, the electronic device may perform operation 1103, and if the sum of the weight points is equal to or greater than the trigger weight point, the electronic device may perform operation 1115.

In operation 1115, the electronic device may determine an analysis range of the text, which needs to be analysed, from the full text (for example, the conversation messages displayed on the user interface). According to an embodiment of the present disclosure, the electronic device may determine the analysis range of the text to be analysed so as to vary from the conversation message that is transmitted/received and displayed at the time at which the sum of the weight points is initialized (e.g., zero) to the conversation message that is transmitted/received and displayed at the time at which the sum of the weight points exceeds a predetermined trigger weight point (end point).

In operation 1117, the electronic device may transmit, to the server, a part of the full text, which belongs to the analysis range of the text, for analysis request. According to an embodiment of the present disclosure, the electronic device may identify at least one conversation message transmitted/received in a period from the start point to the end point, and may transmit, to the server, an analysis request message including data in the form of text contained in the at least one identified conversation message.

In operation 1119, the electronic device may receive, from the server, information (for example, information on access to a service-providing device or a service thereof) related to the service that can be provided by the service-providing device selected by the server according to the analysis result of the part of the text.

In operation 1121, the electronic device may display the received service-related information in a portion of the user interface where the text is being displayed.

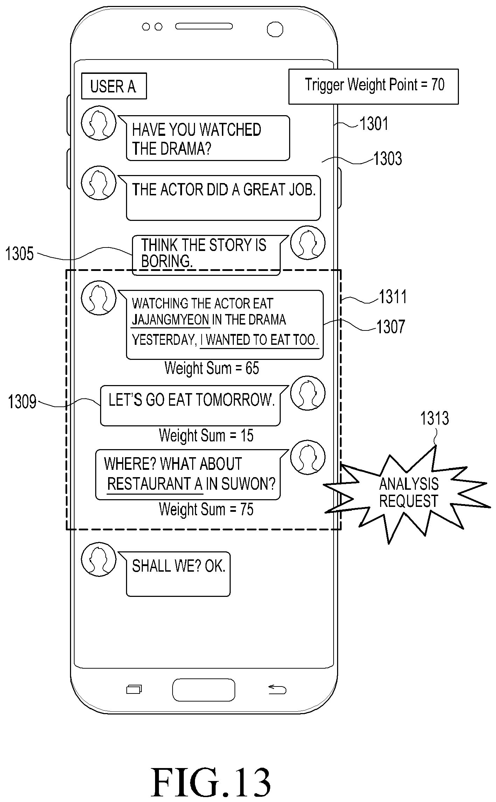

FIG. 13 illustrates a user interface according to various embodiments of the present disclosure.

Referring to FIG. 13, according to various embodiments of the present disclosure, the electronic device (e.g., the electronic device 101 in FIG. 1, the electronic device 210 in FIG. 2, the electronic device 301 in FIG. 3, or the electronic device 401 in FIGS. 4A and 4B) may display transmitted/received conversation messages 1303 on a user interface 1301. The conversation messages 1303 may be displayed to follow the conversation messages 1203 displayed on the user interface 1201 as shown in FIG. 12. Among the conversation messages 1303 shown in FIG. 13, the conversation messages up till the last conversation message 1305 (e.g., "it's boring... "), which correspond to the conversation messages 1203 in FIG. 12, may have no weight point identified from the set of templates or may be in the state in which the sum of the weight points is initialized because the analysis request event has occurred previously.

When a newly transmitted/received conversation message 1307 (e.g., "Watching the actor eat Jajangmyeon in the drama yesterday, I wanted to eat too.") is displayed, the electronic device may identify the type of service regarding the words contained in the newly displayed conversation messages. For example, the electronic device may determine that the service (e.g., domain) relates to food based on specific words ("Jajangmyeon" and "wanted to eat") among the words contained in the conversation messages 1307, and may compare the words of service with a set of templates in order to thereby determine a matching word. For example, the electronic device may identify that the words "wanted to eat" match the regular expression (e.g., "eat") in the template of the food-related service, and may identify a weight point (e.g., 60) set to the matched regular expression. Since the identified weight point (e.g., 60) is not greater than a predetermined trigger weight point (e.g., 70), the electronic device may compare the words contained in the next transmitted/received conversation message 1309 (e.g., "Let's go eat tomorrow.") with the regular expressions contained in the food-related template. For example, if the word (e.g., "Let's go") matches the regular expression (e.g., "go"), the electronic device may identify a weight point (e.g., 15) corresponding thereto. Accordingly, the electronic device may identify that the sum (e.g., 75) of the first weight point (e.g., 60), which was previously identified, and the second weight point (e.g., 15), which is currently identified, is greater than the trigger weight point (e.g., 70). The electronic device may determine, as an analysis range 1311 of the text, the conversation messages that are transmitted/received and displayed from the time (a start point) at which the sum of the weight points is initialized (e.g., zero) to the time (end point) at which the sum of the weight points exceeds a predetermined trigger weight point (e.g., 70). The electronic device may make a request to the server for the analysis of the conversation messages belonging to the analysis range 1311 (see 1313). According to an embodiment of the present disclosure, the electronic device may transmit, to the server, an analysis request message including text data contained in the conversation messages or information on the identified type of service.

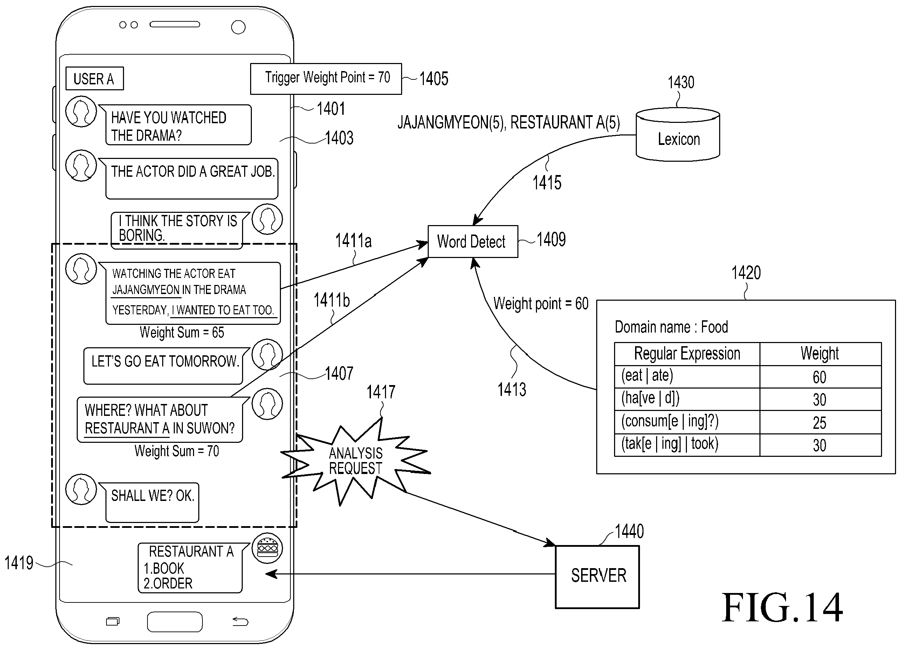

FIG. 14 illustrates a user interface according to various embodiments of the present disclosure.

Referring to FIG. 14, according to various embodiments of the present disclosure, the electronic device (e.g., the electronic device 101 in FIG. 1, the electronic device 210 in FIG. 2, the electronic device 301 in FIG. 3, or the electronic device 401 in FIGS. 4A and 4B) may display transmitted/received conversation messages 1403 on a user interface 1401. The conversation messages 1403 may be displayed to follow the conversation messages 1203 displayed on the user interface 1201 as shown in FIG. 12. Among the conversation messages 1403 shown in FIG. 14, the conversation messages up till the last conversation message (e.g., "I think the story is boring."), which correspond to the conversation messages 1203 in FIG. 12, may have no weight point identified from the set of templates or may be in the state in which the sum of the weight points is initialized because the analysis request event has occurred previously.

When a newly transmitted/received conversation message (e.g., "Watching the actor eat Jajangmyeon in the drama yesterday, I wanted to eat too.") is displayed on the user interface 1401 of the display, the electronic device may identify the type of service regarding the words contained in the newly displayed conversation messages. For example, the electronic device may determine that the service (e.g., domain) relates to food based on specific words ("Jajangmyeon" and "wanted to eat") 1411 a among the words contained in the conversation messages 1407, and may compare the words of service with a set of templates 1420 in order to thereby determine a matching word (see 1411a). For example, the electronic device may identify that the words "wanted to eat" match the regular expression (e.g., "eat") in the template of the food-related service, and may identify a weight point (e.g., 60) set to the matched regular expression (see 1413). The electronic device may determine whether the identified first weight point (e.g., 60) is greater than a predetermined trigger weight point 1405 (e.g., 70) (see 1409). As a result of the determination, since the first weight point is not greater than the trigger weight point 1405, the electronic device may identify the second weight point (e.g., 5) for another word (e.g., "Jajangmyeon") from a separate lexicon DB 1430 (see 1415).

The electronic device may calculate the sum of the identified first (e.g., 60) and second (e.g., 5) weight points, and may determine whether the calculated sum of the weight points (e.g., 65) is greater than a predetermined trigger weight point (e.g., 70) (see 1409). As a result of the determination, if the sum of the weight points is not greater than the trigger weight point, the electronic device may compare words of the next conversation message. For example, the electronic device may identify the third weight point (e.g., 5) for a word (e.g., "restaurant A") contained in the next conversation message from a separate lexicon DB 1430 (see 1415). The electronic device may add the third weight point to the sum of the weight points above, and compare the final sum of the weight points (e.g., 70) with the trigger weight point. Then, the electronic device may identify that the final sum of the weight points is equal to or greater than the predetermined trigger weight point (e.g., 70) (see 1409), and thus, may transmit, to a server 1440, an analysis request for the text data of the conversation messages included in the analysis range 1407 (see 1417).

The electronic device may receive, from the server 1440, information related to the service that can be provided by the service-providing device selected based on the analysis result of the text data, which has been requested for analysis, and may display the received service-related information 1419 on the user interface 1401 together with the conversation messages 1403. The service-related information 1419 may be received immediately in response to the analysis request, or may be received upon user's request. The service-related information 1419 may be displayed using text, special characters, or images (e.g., icons). When a portion of the service-related information 1419 displayed on the user interface 1401 is selected by the user, the electronic device may access an application program corresponding to the service, and may execute the same.

The electronic device may display the received service-related information 1419 on another user interface (e.g., a pop-up window) that is displayed on the user interface 1401 of the display, which displays the transmitted/received conversation messages, so as to overlap the same. As another example, the electronic device may divide the scree area of the display into pieces, and may separately display the first user interface, which shows the conversation messages, and the second user interface, which shows the service-related information 1419, in the divided areas.

The electronic device may generate a trigger event for analysis request when a specific conversation message among the conversation messages contains, for example, a full stop, a question mark, or an indicating word, or when an input for analysis request is received. When the trigger event occurs, the electronic device may make a request for analysis for the conversation messages belonging to a predetermined analysis range 1407 or a specific range based on the specific conversation message (e.g., a predetermined number of conversation messages that are transmitted/received before and after the same). When the trigger event occurs, the electronic device may make an analysis request to the server even if the sum of the weight points is less than the trigger weight point, and may receive, from the server, service-related information immediately in response to the analysis request.

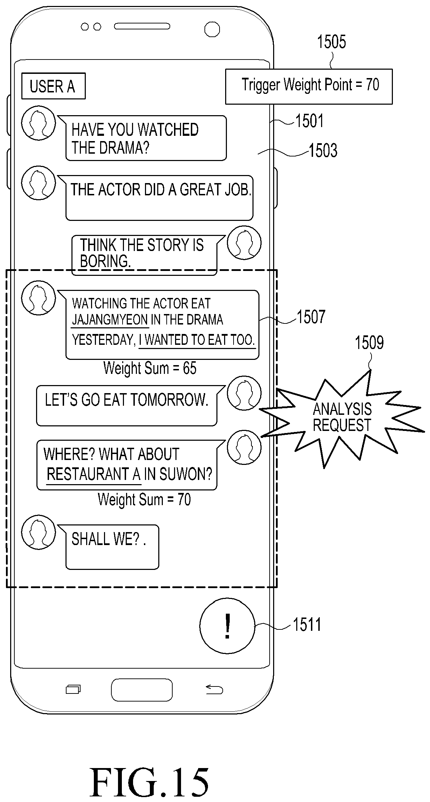

FIG. 15 illustrates a user interface according to various embodiments of the present disclosure.

Referring to FIG. 15, elements 1505 and 1507 are equivalent to elements 1405 and 1411a, respectively, of FIG. 14. According to an embodiment of the present disclosure, the electronic device may identify that no trigger event has occurred in conversation messages 1503 displayed on a user interface 1501. The electronic device may display, on the user interface 1501, a button 1511 for access to the service-related information, instead of receiving, from the server, the service-related information based on the analysis result of the text data, which has been requested for analysis (see 1509), and displaying the same on the user interface 1501. When an input for the button 1511 is received, the electronic device may receive, from the server, the service-related information, and may display the same on the user interface 1501.

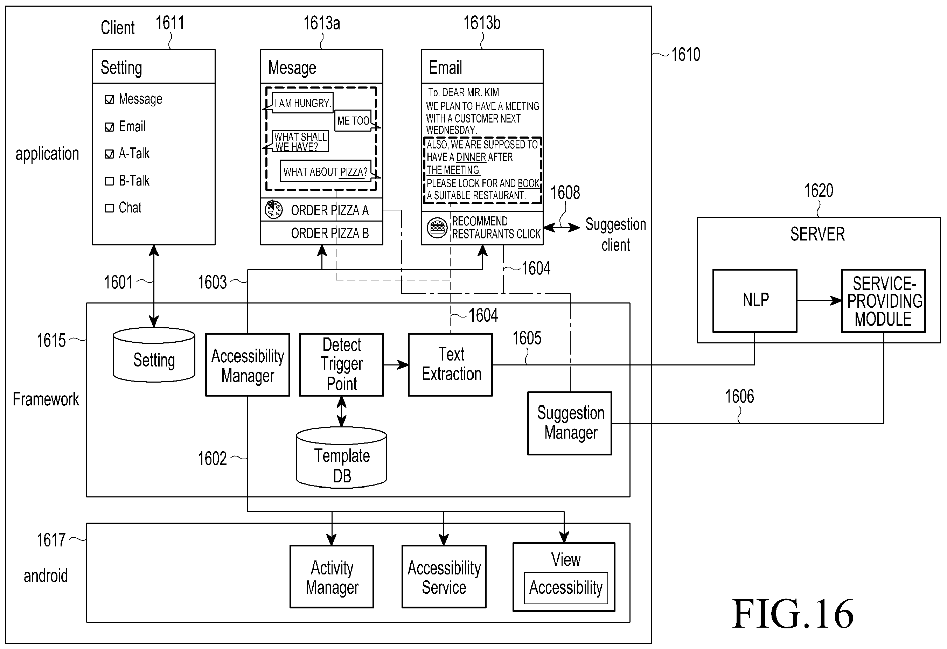

FIG. 16 is a diagram illustrating an operation of an electronic device according to various embodiments of the present disclosure.

Referring to FIG. 16, an electronic device 1610, according to various embodiments of the present disclosure, may display a first user interface 1611 for setting at least one application program on a touch screen display exposed through a portion of a housing.

In operation 1601, when a user input for selecting at least one application program is received through the first user interface, a framework 1615 of the electronic device 1610 may perform control so as to select an application program to be monitored from among the application programs displayed on the first user interface 1611, and so as to display a symbol or an image indicating the selection.

In operation 1602, when the at least one selected application program is executed, the framework 1615 of the electronic device 1610 may monitor transmitted/received messages processed by an OS 1617 (e.g., Android) or information input by the user. The electronic device 1610 may display a second user interface 1613a or 1613b for the application program executed according to the execution of the selected application program.

In operation 1603, the framework 1615 of the electronic device 1610 may compare the monitored message, the text contained in the information input by the user, or the text converted from voice information thereof with a set of templates or a separate lexicon DB in order to thereby determine whether there is a matching word.

In operation 1604, if there is a matching word, the framework 1615 of the electronic device 1610 may extract a part of the text for analysis request based on a weight point corresponding to the matching word. In operation 1605, the framework 1615 of the electronic device 1610 may transmit the extracted part of the text to a server 1620.

In operation 1606, when the server analyses the received part of the text and selects a service-providing device based on the analysed result, the framework 1615 of the electronic device 1610 may receive, from the server, information related to the service provided by the selected service-providing device.

In operation 1607, the framework 1615 of the electronic device 1610 may perform control so as to display the service-related information received from the server 1620 on the second user interface 1613a or 1613b.

In operation 1608, when a user request for the service-related information, which is displayed on the second user interface 1613a or 1613b, is received, the electronic device 1610 may access the corresponding service (application program) or the service-providing device based on the service-related information (e.g., connection information).

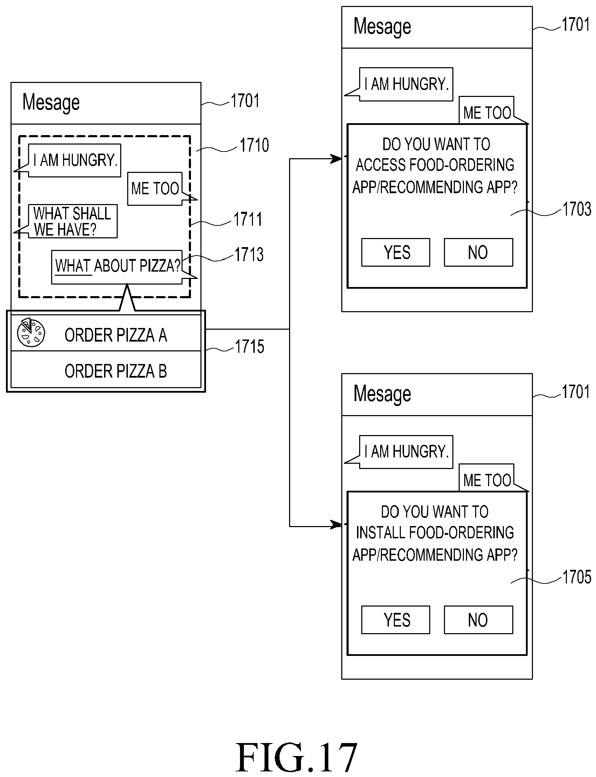

FIG. 17 illustrates a user interface according to various embodiments of the present disclosure.

Referring to FIG. 17, the electronic device may display a second user interface 1701 on the display when at least one selected application program is executed. The electronic device may display conversation messages (text) transmitted and received through the executed application program on the second user interface 1701. The electronic device may extract words for each type of service from the displayed conversation messages, and may display, on the user interface 1701, service connection information 1715 related to a specific word 1713 (e.g., pizza), among the extracted words 1711, in addition to the conversation messages 1710. The electronic device may display, on the second user interface so as to overlap the same, a screen 1703 for determining whether to access the application program associated with the service-related information 1715 related to the specific word 1713 (e.g., pizza). In addition, the electronic device may display, on the second user interface so as to overlap the same, a screen 1705 for determining whether to install the application program related to the service (e.g., food) for the specific word 1713 (e.g., pizza), among the extracted words.

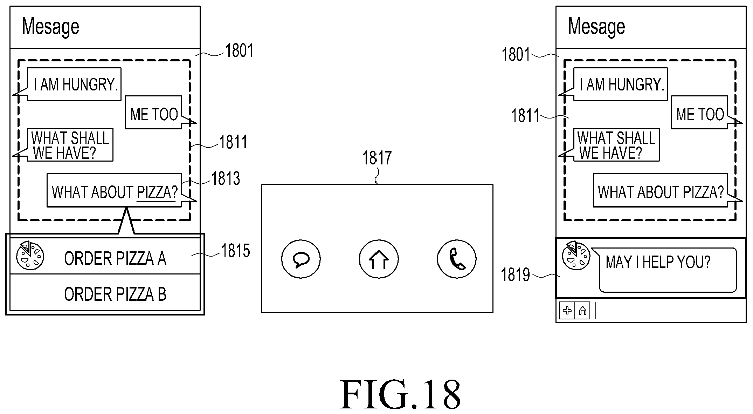

FIG. 18 illustrates a user interface according to various embodiments of the present disclosure.

Referring to FIG. 18, the electronic device may display a second user interface 1801 on the display when at least one selected application program is executed. The electronic device may display conversation messages (text) transmitted and received through the executed application program on the second user interface 1801. The electronic device may extract words for each type of service from the displayed conversation messages, and may display, on the second user interface 1801, service connection information 1815 related to a specific word 1813 (e.g., pizza), among the extracted words, in addition to the conversation messages 1811. The electronic device may access at least one application program 1817 associated with the service connection information 1815 related to the specific word 1813 (e.g., pizza), and may display, on the second user interface 1801, the service information 1819 provided through the at least one accessed application program 1817 in addition to the conversation messages 1811.

An information providing method of an electronic device, according to any one of various embodiments of the present disclosure, may include receiving a user input for selecting at least one application program through a first user interface displayed on a display, displaying text on a second user interface associated with the selected application program, accessing at least a part of the displayed text, comparing the accessed part of the displayed text with at least one template among a plurality of templates stored in a memory, transmitting at least a portion of the accessed part of the displayed text using a communication circuit based on, at least in part, the comparison, receiving data created in relation to the accessed part of the displayed text using the communication circuit, and displaying text and/or images on the second user interface to overlap, at least in part, the same, wherein each of the templates includes a set of words, phrases, and/or sentences.

An information providing method of an electronic device, according to any one of various embodiments of the present disclosure, may include transmitting first text, among the text display on the display, to a first external electronic device through a communication circuit, receiving, from the first external electronic device, connection information to a second external electronic device corresponding to the first text through the communication circuit, and displaying, on the display, the received connection information to the second external electronic device.

According to various embodiments of the present disclosure, the method may further include determining a first service related to the first text and transmitting information about the first text and the first service to the first external electronic device. The connection information to the second external electronic device may be information corresponding to the first text and the first service.

According to various embodiments of the present disclosure, the method may include comparing the text displayed on a user interface for at least one application program displayed on the display with a set of templates stored in a memory, determining whether there is a word in the text, which matches the set of templates, if there is a word matching the set of templates, obtaining a weight point corresponding to the matching word from the set of templates, and identifying the first text based on the obtained weight point.

According to various embodiments of the present disclosure, the method may further include, if there are two or more obtained weight points, calculating the sum of the weight points, and if the calculated sum of the weight points is greater than a predetermined trigger weight point, identifying the first text for analysis request.

According to various embodiments of the present disclosure, the identifying of the first text may include setting, as the first text, the text included in the range from the sentence containing a word that is detected when the sum of the weight points is equal to or greater than zero to the sentence containing a word that is detected when the sum of the weight points is equal to or greater than the trigger weight point.

According to various embodiments of the present disclosure, the method may further include updating the template for the type of service based on a part of the text corresponding to the analysis range when the sum of the weight points for the type of service exceeds a trigger weight point and when an analysis request for the analysis range of the text has failed.

According to various embodiments of the present disclosure, the method may further include, if there is a word in the text, which cannot be expressed as a regular expression, identifying a weight point of the word, which cannot be expressed as a regular expression, using a separate lexicon DB.

According to various embodiments of the present disclosure, the method may further include displaying, on the user interface so as to overlap, at least in part, the same, a guidance window to inquire whether to access or install a recommended application related to the service provided by the service-providing device selected by the server according to the analysis result of a part of the text.

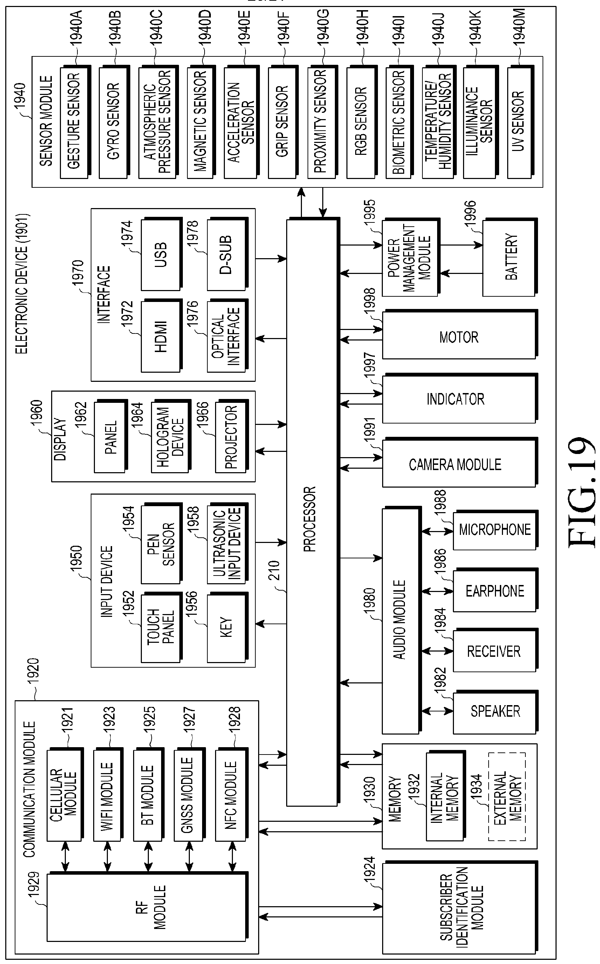

FIG. 19 is a block diagram of an electronic device according to various embodiments of the present disclosure.

Referring to FIG. 19, an electronic device 1901, for example, may include all or some of the elements of the electronic device 101 shown in FIG. 1. The electronic device 1901 may include one or more processors 1910 (e.g., AP), a communication module 1920, a subscriber identification module (SIM) 1924, a memory 1930, a sensor module 1940, an input device 1950, a display 1960, an interface 1970, an audio module 1980, a camera module 1991, a power management module 1995, a battery 1996, an indicator 1997, and a motor 1998. The processor 1910, for example, may control a multitude of hardware or software elements connected with the processor 1910, and may perform the processing of various pieces of data and a calculation by executing an OS or application programs. The processor 1910 may be implemented by, for example, a system on chip (SoC). According to an embodiment of the present disclosure, the processor 1910 may further include a graphical processing unit (GPU) or an image signal processor (ISP). The processor 1910 may include at least some (e.g., the cellular module 1921) of the elements shown in FIG. 19. The processor 1910 may load instructions or data received from one or more other elements (e.g., a non-volatile memory) to a volatile memory to then process the same, and may store the result data in a non-volatile memory.

The communication module 1920 may have a configuration the same as or similar to that of the communication interface 170. The communication module 1920, for example, may include a cellular module 1921, a Wi-Fi module 1923, a BT module 1925, a GNSS module 1927, an NFC module 1928, and an RF module 1929. The cellular module 1921, for example, may provide services of voice calls, video calls, text messaging, or the Internet through communication networks. According to an embodiment of the present disclosure, the cellular module 1921 may perform identification and verification of the electronic device 1901 in communication networks using the SIM (e.g., a SIM card) 1924. According to an embodiment of the present disclosure, the cellular module 1921 may perform at least some of the functions provided by the processor 1910. According to an embodiment of the present disclosure, the cellular module 1921 may include a CP. According to an embodiment of the present disclosure, at least some (e.g., two or more) of the cellular module 1921, the Wi-Fi module 1923, the BT module 1925, the GNSS module 1927, or the NFC module 1928 may be included in one integrated chip (IC) or one IC package. The RF module 1929 may transmit and receive communication signals (e.g., RF signals). The RF module 1929 may include, for example, a transceiver, a power amp module (PAM), a frequency filter, a low-noise amplifier (LNA), antennas, or the like. According to an embodiment of the present disclosure, at least one of the cellular module 1921, the Wi-Fi module 1923, the BT module 1925, the GNSS module 1927, or the NFC module 1928 may transmit and receive RF signals through a separate RF module. The SIM 1924, for example, may include a card that adopts a SIM and/or an embedded SIM, and may contain inherent identification information (e.g., an integrated circuit card identifier (ICCID)) or subscriber information (e.g., an international mobile subscriber identity (IMSI)).

The memory 1930 (e.g., the memory 130) may include an internal memory 1932 or an external memory 1934. The internal memory 1932, for example, may include at least one of volatile memories (e.g., dynamic RAM (DRAM), static RAM (SRAM), synchronous dynamic RAM (SDRAM), or the like) or non-volatile memories (e.g., an one-time programmable ROM (OTPROM), programmable ROM (PROM), electronically programmable ROM (EPROM), electrically erasable programmable ROM (EEPROM), a mask ROM, a flash ROM, a flash memory, a hard drive, a solid state drive (SSD), or the like). The external memory 1934 may include a flash drive (for example, compact flash (CF), SD, micro-SD, mini-SD, xD, a multi-media card (MMC), a memory stick, or the like). The external memory 1934 may be functionally and/or physically connected with the electronic device 1901 through any of various interfaces.

The sensor module 1940, for example, may measure physical quantities or may detect the operation state of the electronic device 1901 to thus convert the measured or detected information to electric signals. The sensor module 1940 may include at least one of, for example, a gesture sensor 1940A, a gyro-sensor 1940B, an atmospheric pressure sensor 1940C, a magnetic sensor 1940D, an acceleration sensor 1940E, a grip sensor 1940F, a proximity sensor 1940G, a color sensor 1940H (e.g., a red-green-blue (RGB) sensor), a biometric sensor 1940I, a temperature/humidity sensor 1940J, an illuminance sensor 1940K, or an ultra-violet (UV) sensor 1940M. Alternatively or additionally, the sensor module 1940, for example, may further include an E-nose sensor, an electromyography (EMG) sensor, an electroencephalogram (EEG) sensor, an electrocardiogram (ECG) sensor, an infrared (IR) sensor, an iris sensor, or a fingerprint sensor. The sensor module 1940 may further include a control circuit for controlling one or more sensors included therein. In some embodiments of the present disclosure, the electronic device 1901 may further include a processor as a part of the processor 1910 or separately from the processor 1910, which is configured to control the sensor module 1940, in order to thereby control the sensor module 1940 while the processor 1910 is in a sleep mode.

The input device 1950, for example, may include a touch panel 1952, a (digital) pen sensor 1954, keys 1956, or an ultrasonic input device 1958. The touch panel 1952 may use at least one of, for example, a capacitive type, a pressure-sensitive type, an infrared type, or an ultrasonic type. In addition, the touch panel 1952 may further include a control circuit. The touch panel 1952 may further include a tactile layer in order to thereby provide a user with a tactile reaction. For example, the (digital) pen sensor 1954 may be a part of the touch panel, or may include a separate recognition sheet. The keys 1956 may include, for example, physical buttons, optical keys, or a keypad. The ultrasonic input device 1958 may detect ultrasonic waves that are generated in the input means through a microphone (e.g., the microphone 1988) to thereby identify data corresponding to the detected ultrasonic waves.

The display 1960 (e.g., the display 160) may include a panel 1962, a hologram device 1964, a projector 1966, or a control circuit for controlling the same. The panel 1962 may be implemented to be, for example, flexible, transparent, or wearable. The panel 1962 may be configured with the touch panel 1952 as one or more modules. According to an embodiment of the present disclosure, the panel 1962 may include a pressure sensor (or force sensor) capable of measuring the intensity of pressure with respect to a user's touch. The pressure sensor may be implemented integrally with the touch panel 1952, or may be implemented using one or more sensors separately from the touch panel 1952. The hologram device 1964 may display 3D images in the air using light interference. The projector 1966 may display images by projecting light onto a screen. The screen may be positioned, for example, inside or outside the electronic device 1901. The interface 1970 may include, for example, an HDMI 1972, a USB 1974, an optical interface 1976, or a D-subminiature (D-sub) 1978. The interface 1970, for example, may be included in the communication interface 170 shown in FIG. 1. Additionally or alternatively, the interface 1970 may include, for example, a mobile high-definition link (MHL) interface, an SD card/MMC interface, or an infrared data association (IrDA) standard interface.

The audio module 1980, for example, may convert a sound into an electric signal, and vice versa. At least some elements of the audio module 1980 may be included, for example, in the input/output interface 150 shown in FIG. 1. For example, the audio module 1980 may process voice information that is input or output through a speaker 1982, a receiver 1984, earphones 1986, or a microphone 1988. For example, the camera module 1991, which is a device for photographing still and moving images, according to an embodiment of the present disclosure, may include one or more image sensors (e.g., a front sensor or a rear sensor), lenses, an ISP, or a flash (e.g., an LED or a xenon lamp). The power management module 1995, for example, may manage the power of the electronic device 1901. According to an embodiment of the present disclosure, the power management module 1995 may include a power management integrated circuit (PMIC), a charger IC, or a battery or fuel gauge. The PMIC may be implemented by a wired charging type or a wireless charging type. The wireless charging type may encompass, for example, a magnetic resonance type, a magnetic induction type, or an electromagnetic wave type, and additional circuits for wireless charging, such as coil loops, resonance circuits, or rectifiers, may be further provided. The battery gauge may measure, for example, the remaining power of the battery 1996, a charging voltage, current, or temperature. The battery 1996 may include, for example, a rechargeable battery or a solar battery.

The indicator 1997 may display a specific state (e.g., a booting state, a message state, or a charging state) of the whole or a part (e.g., the processor 1910) of the electronic device 1901. The motor 1998 may convert an electric signal to a mechanical vibration, and may provide a vibration or a haptic effect. The electronic device 1901 may include a mobile-TV supporting device (e.g., a GPU) for processing media data according to standards, such as, for example, digital multimedia broadcasting (DMB), digital video broadcasting (DVB), or mediaFlo™. The respective elements described in the present specification may be configured using one or more components, and the names thereof may vary depending on the type of electronic device. According to various embodiments of the present disclosure, the electronic device (e.g., the electronic device 1901) may be configured by excluding some elements, by adding other elements thereto, or by combining some elements thereof into a single entity while performing functions the same as those performed before the combination.

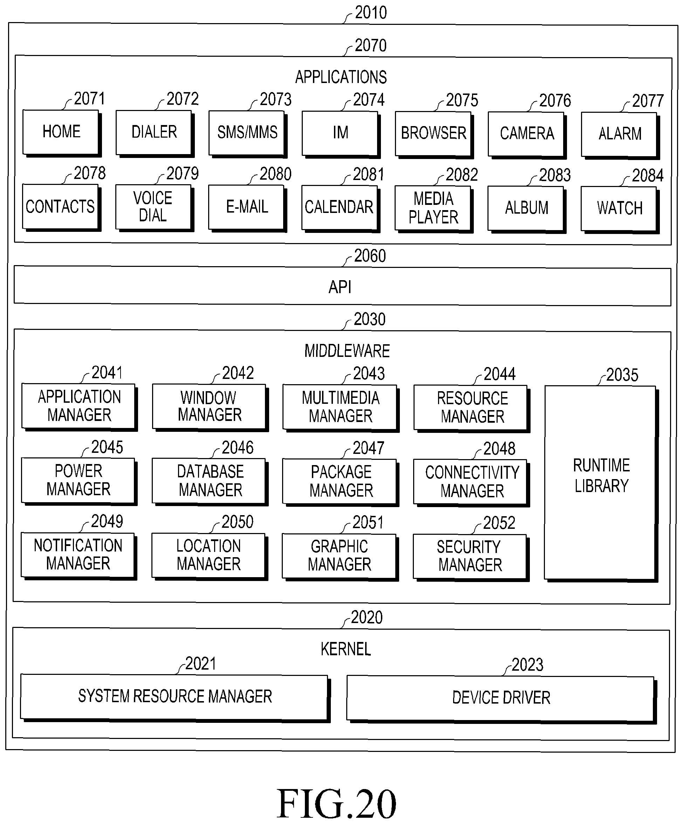

FIG. 20 is a block diagram of a program module, according to various embodiments of the present disclosure.

Referring to FIG. 20, according to an embodiment of the present disclosure, the program module 2010 (e.g., the programs 140) may include an OS for controlling resources related to the electronic device (e.g., the electronic device 101) and/or various applications (e.g., the application programs 147) operated under the OS. For example, the OS may be Android™, iOS™, Windows™, Symbian™, Tizen™, Bada™, or the like. The program module 2010 may include a kernel 2020 (e.g., the kernel 141), middleware 2030 (e.g., the middleware 143), an API 2060 (e.g., the API 145), or applications 2070 (e.g., the application programs 147). At least some of the program module 2010 may be preloaded in the electronic device, or may be downloaded from external electronic devices (e.g., the electronic devices 102 and 104 or the server 106).

The kernel 2020, for example, may include a system resource manager 2021 or a device driver 2023. The system resource manager 2021 may perform control, allocation, or collection of the system resources. According to an embodiment of the present disclosure, the system resource manager 2021 may include a process management unit, a memory management unit, or a file system management unit. The device driver 2023 may include, for example, a display driver, a camera driver, a BT driver, a shared memory driver, a USB driver, a keypad driver, a Wi-Fi driver, an audio driver, or an inter-process communication (IPC) driver. The middleware 2030, for example, may provide functions required in common for the applications 2070, or may provide various functions to the applications 2070 through the API 2060 in order to allow the applications 2070 to use the limited system resources in the electronic device. According to an embodiment of the present disclosure, the middleware 2030 may include at least one of a runtime library 2035, an application manager 2041, a window manager 2042, a multi-media manager 2043, a resource manager 2044, a power manager 2045, a DB manager 2046, a package manager 2047, a connectivity manager 2048, a notification manager 2049, a location manager 2050, a graphic manager 2051, or a security manager 2052.

The runtime library 2035, for example, may include a library module that a compiler uses in order to add new functions through programming languages while the applications 2070 are being executed. The runtime library 2035 may perform the input/output management, the memory management, or a function of an arithmetic calculation. The application manager 2041, for example, may manage a life cycle of at least one of the applications 2070. The window manager 2042 may manage a graphical user interface (GUI) resource used in the screen. The multi-media manager 2043 may identify formats for reproducing various media files, and may perform encoding or decoding of media files using a codec corresponding to the format. The resource manager 2044 may manage source codes or storage spaces of the applications 2070. The power manager 2045, for example, may manage the capacity, temperature, or power of a battery, and may provide power information necessary for the operation of the electronic device using corresponding information among them. According to an embodiment of the present disclosure, the power manager 2045 may interwork with a basic input/output system (BIOS). The DB manager 2046 may create, retrieve, or change a DB to be used by the applications 2070. The package manager 2047 may manage the installation or update of the applications that are distributed in the form of a package file.

The connectivity manager 2048, for example, may manage a wireless connection. The notification manager 2049 may provide the user with events, such as received messages, appointments, or proximity notifications. The location manager 2050, for example, may manage location information of the electronic device. The graphic manager 2051, for example, may manage graphic effects to be provided to the user or the user interfaces related thereto. The security manager 2052, for example, may provide a function of system security or user authentication. According to an embodiment of the present disclosure, the middleware 2030 may include a telephony manager for managing voice or video calls of the electronic device or a middleware module capable of forming a combination of the functions of the above-described elements. According to an embodiment of the present disclosure, the middleware 2030 may provide a module that is specialized according to the type of OS. The middleware 2030 may dynamically exclude some of the typical elements or add new elements thereto. The API 2060, for example, may be a group of API programming functions, and may be provided as a different configuration according to the OS. For example, one set of APIs may be provided to each platform in the case of Android or iOS, and two or more sets of APIs may be provided to each platform in the case of Tizen.

The applications 2070, for example, may include applications of a home application 2071, a dialer application 2072, a short message service (SMS)/multimedia messaging service (MMS) application 2073, an instant message (IM) application 2074, a browser application 2075, a camera application 2076, an alarm application 2077, contacts application 2078, a voice dialer application 2079, an e-mail application 2080, a calendar application 2081, a media player application 2082, an album application 2083, a watch application 2084, healthcare (e.g., measuring the amount of exercise or blood glucose), providing environment information (e.g., providing atmospheric pressure, humidity, or temperature information), or the like. According to an embodiment of the present disclosure, the applications 2070 may include an information-exchange application capable of supporting the exchange of information between the electronic device and the external electronic devices. The information-exchange application, for example, may include a notification relay application for relaying specific information to the external electronic devices, or may include a device management application for managing the external electronic devices. For example, the notification relay application may transfer notification information generated from other applications of the electronic device to the external electronic device, or may receive notification information from the external electronic device to thus provide the same to the user. The device management application, for example, may install, delete, or update the functions (e.g., turning on and off the external electronic device (or some elements thereof) or adjusting the brightness (or resolution) of a display) of the external electronic device that communicates with the electronic device or the applications executed in the external electronic device. According to an embodiment of the present disclosure, the applications 2070 may include applications that are designated according to the attributes of the external electronic device (e.g., a healthcare application of a mobile medical device). According to an embodiment of the present disclosure, the applications 2070 may include applications that are received from the external electronic device. At least some of the program module 2010 may be implemented (executed) by software, firmware, hardware (e.g., the processor 310), or a combination thereof, and may include modules, program routines, sets of instructions, or processors for executing one or more functions.

The term "module" as used herein may include a unit consisting of hardware, software, or firmware, and may, for example, be used interchangeably with the term "logic", "logical block", "component", "circuit", or the like. The "module" may be an integrated component, or a minimum unit for performing one or more functions or a part thereof. The "module" may be mechanically or electronically implemented and may include, for example, an application-specific integrated circuit (ASIC) chip, a field-programmable gate arrays (FPGA), or a programmable-logic device, which has been known or are to be developed in the future, for performing certain operations. At least some of devices (e.g., modules or functions thereof) or methods (e.g., operations) according to various embodiments may be implemented by an instruction which is stored a computer-readable storage medium (e.g., the memory 140) in the form of a program module. The instruction, when executed by a processor (e.g., the processor 120), may cause the one or more processors to execute the function corresponding to the instruction.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include a Read-Only Memory (ROM), a Random-Access Memory (RAM), Compact Disc-ROMs (CD-ROMs), magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

According to various embodiments of the present disclosure, there is provided a computer-readable recording medium that records a program to be executed in a computer, the program allowing, when being executed by a processor, the processor to perform receiving a user input for selecting at least one application program through a first user interface displayed on a display, displaying text, which is input through the display or is received using a communication circuit, on a second user interface associated with the selected application program, accessing at least a part of the displayed text, comparing the accessed part of the displayed text with at least one template among a plurality of templates stored in a memory, transmitting at least a portion of the accessed part of the displayed text using the communication circuit based on, at least in part, the comparison, receiving data created in relation to the accessed part of the displayed text using the communication circuit, and displaying text and/or images on the second user interface to overlap, at least in part, the same.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a housing;
a touch screen display exposed through a portion of the housing;
a wireless communication circuit positioned inside the housing;
at least one processor positioned inside the housing and operatively or electrically connected to the display and the communication circuit; and
a non-transitory memory positioned inside the housing and electrically connected to the at least one processor,
wherein the non-transitory memory is configured to:
store a plurality of templates, each of which includes a respective set of words, phrases, and/or sentences, and
store at least one application program configured to process and display text data, and
wherein the non-transitory memory stores instructions that, when executed, cause the at least one processor to:
receive a user input to select at least one application program through a first user interface displayed on the display,
display text on a second user interface associated with the selected application program, wherein the text is input through the display or received using the communication circuit,
access at least a portion of the displayed text,
make comparison between the accessed at least a portion of the displayed text with and at least one of the templates,
transmit at least a part of the accessed at least a portion of the displayed text, using the communication circuit, based on at least partly on the comparison,
receive data generated in association with the at least part of the accessed at least a portion of the displayed text, using the communication circuit, and
display text and/or an image on at least partially overlie the second user interface.

2. The electronic device of claim 1, wherein the first user interface is not part of the at least one application program.

3. The electronic device of claim 1, wherein the at least one application program includes a text-messaging application program, an email application program, an instant messaging program and/or a social media service (SMS) application program, and
wherein the at least one application program is downloaded from an App Store.

4. The electronic device of claim 1, wherein the instructions include at least a part of Android operating system (OS), and wherein the instructions cause an accessible manager of the Android OS to access at least a portion of the displayed text displayed on the second user interface.

5. The electronic device of claim 1, wherein the instructions include a software program configured to change text to speech, and wherein the instructions cause the software program to access at least a portion of the displayed text displayed on the second user interface.

6. The electronic device of claim 1, wherein the instructions cause the at least one processor to display a window containing the text and/or images, that overlies the second user interface.

7. An electronic device comprising:
a housing;
a touch screen display exposed through a portion of the housing;
a wireless communication circuit positioned inside the housing;
at least one processor positioned inside the housing, and operatively or electrically connected to the display and the communication circuit; and
a non-transitory memory positioned inside the housing and electrically connected to the at least one processor,
wherein the non-transitory memory is configured to:
store a plurality of templates, each of which includes a respective set of words, phrases, and/or sentences, and
store at least one application program configured to process and display text data, and
wherein the non-transitory memory stores instructions that, when executed, cause the at least one processor to:
display text on a user interface associated with the application program, wherein the text is input through the display or received using the communication circuit,
access, by a software program that converts text into speech, at least a portion of the displayed text,
make comparison between the accessed at least a portion of the displayed text and at least one of the templates,
transmit at least part of the accessed at least a portion of the displayed text, using the communication circuit, based on at least partly on the comparison,
receive data generated in association with the at least part of the accessed at least portion of the displayed text, using the communication circuit, and
display text and/or an image to at least partially overlie the user interface.

8. The electronic device of claim 7, wherein the user interface is not part of the at least one application program,
wherein the at least one application program includes a text-messaging application program, an email application program, an instant messaging program and/or a social media service (SMS) application program, and
wherein the at least one application program is downloaded from an App Store.

9. The electronic device of claim 7, wherein the instructions include at least a part of Android operating system (OS), and wherein the instructions cause an accessible manager of the Android OS to access at least a portion of the displayed text displayed on the user interface.

10. The electronic device of claim 7, wherein the instructions include a software program configured to change text to speech, and wherein the instructions cause the software program to access at least a portion of the displayed text displayed on the user interface.

11. The electronic device of claim 7, wherein the instructions cause the at least one processor to display a window containing the text and/or images, that overlies the user interface.

12. An electronic device comprising:
a housing;
a touch screen display exposed through a portion of the housing;
a wireless communication circuit positioned inside the housing;
at least one processor positioned inside the housing and operatively or electrically connected to the display and the communication circuit; and
a non-transitory memory positioned inside the housing and electrically connected to the at least one processor,
wherein the non-transitory memory is configured to:
store a plurality of templates, each of which includes a respective set of words, phrases, and/or sentences, and
store at least one application program configured to process text data and to display the text data on a user interface, and
wherein the non-transitory memory stores instructions that, when executed, cause the at least one processor to:
display text on the user interface, wherein the text is input through the display or received using the communication circuit,
access, from outside the application program, at least a portion of the displayed text,
make comparison between the accessed at least a portion of the displayed text and at least one of the templates,
transmit at least a part of the accessed at least a portion of the displayed text, using the communication circuit, based on at least partly on the comparison,
receive data generated in association with the at least part of the accessed at least a portion of the displayed text, using the communication circuit, and
display text and/or an image on at least partially overlie the user interface.

13. The electronic device of claim 12, wherein the user interface is not part of the at least one application program,
wherein the instructions include at least a part of Android operating system (OS), and wherein the instructions cause an accessible manager of the Android OS to access at least a portion of the displayed text displayed on the user interface and

14. The electronic device of claim 12, wherein the instructions include a software program configured to change text to speech, and wherein the instructions cause the software program to access at least a portion of the displayed text displayed on the user interface.

15. The electronic device of claim 12, wherein the instructions cause the at least one processor to display a window containing the text and/or images, that overlies the user interface.
